(19) Europäisches Patentamt
European Patent Office
Office européen des brevets

(11) EP 4 296 293 B1

(12) EUROPEAN PATENT SPECIFICATION

(45) Date of publication and mention of the grant of the patent:
**27.08.2025 Bulletin 2025/35**

(21) Application number: **22762488.9**

(22) Date of filing: **28.02.2022**

(51) International Patent Classification (IPC):
***C08G 63/06*** (2006.01) ***C08G 63/685*** (2006.01)
***C08G 63/91*** (2006.01) ***C09K 8/56*** (2006.01)
***C08F 283/02*** (2006.01) ***C09K 8/035*** (2006.01)
***C09K 8/508*** (2006.01)

(52) Cooperative Patent Classification (CPC):
(C-Sets available)
**C08G 63/06; C08F 283/02; C08G 63/6852; C08G 63/912; C09K 8/035; C09K 8/508** (Cont.)

(86) International application number:
**PCT/CN2022/078349**

(87) International publication number:
**WO 2022/184023 (09.09.2022 Gazette 2022/36)**

# (54) DENDRITIC POLYMER, AND PREPARATION METHOD THEREFOR AND APPLICATION THEREOF

DENDRITISCHES POLYMER UND HERSTELLUNGSVERFAHREN DAFÜR UND ANWENDUNG DAVON

POLYMÈRE DENDRITIQUE, SON PROCÉDÉ DE PRÉPARATION ET SON APPLICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2021 CN 202110226208**
**01.03.2021 CN 202110227412**

(43) Date of publication of application:
**27.12.2023 Bulletin 2023/52**

(73) Proprietors:
- **China Petroleum & Chemical Corporation**
  **Beijing 100728 (CN)**
- **Sinopec Petroleum Engineering Technology Research**
  **Institute Co., Ltd**
  **Beijing 102206 (CN)**

(72) Inventors:
- **YANG, Xiaohua**
  **Beijing 102206 (CN)**
- **WANG, Lin**
  **Beijing 102206 (CN)**
- **LI, Zhoujun**
  **Beijing 102206 (CN)**
- **LIN, Yongxue**
  **Beijing 102206 (CN)**
- **JIN, Junbin**
  **Beijing 102206 (CN)**
- **QIAN, Xiaolin**
  **Beijing 102206 (CN)**

(74) Representative: **Hoffmann Eitle**
**Patent- und Rechtsanwälte PartmbB**
**Arabellastraße 30**
**81925 München (DE)**

(56) References cited:
**WO-A1-2008/059646**
**CN-A- 101 993 532**
**CN-A- 107 674 189**
**CN-A- 109 134 839**
**CN-A- 111 171 224**
**US-A- 4 938 803**
**US-A- 5 418 301**
**US-A1- 2016 369 064**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 283/02, C08F 220/585, C08F 220/06, C08F 220/56;**
**C08F 283/02, C08F 220/585, C08F 220/56, C08F 220/54;**
**C08F 283/02, C08F 220/585, C08F 220/56, C08F 226/08, C08F 220/34;**
**C08F 283/02, C08F 220/585, C08F 226/08**

## Description

### CROSS REFERENCE TO RELATED APPLICARTIONS

The application claims priority to the Chinese Application No. "202110226208.5", filed on March 1, 2021, entitled "POLYAMINE ESTER DENDRITIC POLYMER, AND PREPARATION METHOD THEREFOR AND APPLICATION THEREOF", and the Chinese Application No. "202110227412.9", filed on March 1, 2021, entitled "POLYESTER DENDRITIC POLYMER, AND PREPARATION METHOD THEREFOR AND APPLICATION THEREOF".

### TECHNICAL FIELD

The present disclosure belongs to the technical field of petroleum engineering, and particularly relates to a dendritic polymer, and a preparation method and a use thereof.

### BACKGROUND

The filtrate loss reducer is one of the pivotal treating agents of the drilling fluids, its main function is to promote formation of a thin and dense filter cake with low permeability on the wellbore wall, thereby reducing invasion of filtrate into the stratum and lowering the probability of shale hydration and swelling in enhancing wellbore stability. The polymer filtrate loss reducers with resistance to high temperature and high salinity have been the focus and difficulty of researches.

A large number of researches have been conducted on the high temperature resistance and salt resistance of the filtrate loss reducers in China and foreign countries in recent years. The main practice is to adjust a chain structure of the polymer filtrate loss reducer by using the monomer comprising 2-acrylamido-2-methylpropane sulfonic acid (AMPS), the product properties regarding the temperature resistance and Calcium salt resistance are effectively improved by means of two methyl substituents and sulfonic acid group and the like on the functional group of pendant group. For example, CN111171224A discloses a hyperbranched polymer and a preparation method thereof, and applications of the hyperbranched polymer in preparation of a drilling fluid. The hyperbranched polymer is prepared by an one-step copolymerization of an organic acid monomer, acrylamide, N,N-methylene bisacrylamide and a chain transfer agent; the N,N-methylene bisacrylamide contains two polymerizable carbon-carbon double bonds, it generates branching during the polymerization process; the organic acid monomer is one or more of 2-acrylamido-2-methylpropane sulfonic acid and 2-acryloyloxy-2-methylpropane sulfonic acid; the chain transfer agent is one or more of 4-cyanovaleric acid dithiobenzoate and (3-phenylmethylmercaptothiocarbonyl sulfide) propionic acid, and the mass ratio of the organic acid monomer to the acrylamide to the N,N-methylene bisacrylamide to the chain transfer agent is (24-66):(34-76):(0.1-5):(0.21-7); the hyperbranched polymer has a random hyperbranched structure. The hyperbranched polymer can solve the technical problems with respect to the large viscosity effect of high temperature and high density drilling fluid, the limited addition amount of the treating agent, as well as the rheological property and the suspension stability can hardly be compromised. US 4 938 803 A describes a vinyl grafted lignite fluid loss additive comprising a lignite grafted with at least one vinyl monomer and at least one co-monomer, whereby the vinyl monomer imparts an amine or quaternary nitrogen functionality co-graft, such that the co-graft is relatively stable to hydrolysis.

CN 109 134 839 A describes a preparation method of a hyperbranched paraffin wax and its application in artificial boards, wherein the hyperbranched polymer side chain ends contain a large amount of paraffin wax.

CN 107 674 189 A describes a high-solid hyperbranched silicon-modified unsaturated polyester resin, wherein the high-solid hyperbranched silicon-modified unsaturated polyester resin has a dendritic branched molecular structure and contains multiple active groups at the end and has a solid content of 90% or more.

CN 101 993 532 A describes a carboxyl-containing hyperbranched poly(amine-ester) acrylate, wherein the carboxyl group and the acrylate group are connected to the hyperbranched poly(amine-ester) molecular skeleton structure through the semi-addition product of maleic anhydride and monohydroxy acrylate and diisocyanate, respectively.

### SUMMARY

The present disclosure aims to provide a novel dendritic polymer for use in a drilling fluid, it not only has a desirable filtrate loss reduction effect, but also exhibits a sound blocking performance; thus the dendritic polymer can act as both a filtrate loss reducer and a blocking agent in some circumstances.

A first aspect the present disclosure provides a dendritic polymer comprising a dendritic polyester as a core, and a plurality of arms obtained by means of polymerization of an alkenyl monomer; the root-mean-square radius of gyration of the dendritic polymer does not exceed 100 nm; the alkenyl monomer contains a non-ionic monomer and an anionic monomer, wherein the non-ionic monomer is one or more selected from the group consisting of acrylamide monomers, chain and cyclic N-vinyl amide monomers, and the anionic monomer is polymerizable monomers having carboxyl-COOH

and/or sulfonic acid groups-$SO_3H$.

A second aspect of the present disclosure provides a method for preparing a filtration loss reducer comprising the following steps: contacting a dendritic polyester with an alkenyl monomer under the free radical polymerization reaction conditions, and removing the unreacted monomer and solvent, wherein the free radical polymerization conditions cause that the produced polymer has a weight average molecular weight of 30,000-1,000,000g/mol; and the alkenyl monomer contains a non-ionic monomer, an anionic monomer and optionally a cationic monomer, wherein the non-ionic monomer is one or more selected from the group consisting of acrylamide monomers, chain and cyclic N-vinyl amide monomers, and the anionic monomer is polymerizable monomers having carboxyl-COOH and/or sulfonic acid groups-$SO_3H$.

A third aspect of the present present disclosure provides a drilling fluid comprising the dendritic polymer and/or the filtrate loss reducer prepared with the aforesaid method.

A fourth aspect of the present disclosure provides a use of the dendritic polymer and/or the filtrate loss reducer in the aspects of the blocking with a drilling fluid and the filtrate loss reduction.

The dendritic polymer of the present disclosure contains a dendritic polyester as a core, and adopts an acrylamide which is generally used for synthesis of a filtrate loss reducer, a N-vinyl, and an anionic monomer containing a sulfonic acid group (e.g., 2-acrylamido-2-methylpropane sulfonic acid) as the monomers for forming the arms, and by means of the free radical polymerization (i.e., the arms are bonded to the core through carbon-carbon single bonds, thereby obtaining a dendritic polymer comprising a hydroxyl group-rich dendritic polyester as a core, and the polymer produced by copolymerization of a substituted amide type nonionic monomer, an anionic monomer containing a sulfonic acid group, and the like as the arms. Compared with a linear polymer, in the case that the molecular weight is identical, the dendritic polymer of the present disclosure has a smaller root-mean-square radius of gyration, and is more compact in structure, so that the dendritic polymer is used in a drilling fluid, has a stronger filtrate loss reduction function, has a blocking performance, and also has better temperature resistance and salt resistance.

## BRIEF DESCRIPTION OF THE DRAWINGS

FIG. 1 illustrates a schematic diagram of the polymerization reaction formula of the dendritic polymer of the present disclosure.

FIG. 2 and FIG. 3 illustrate an infrared spectrogram of dendritic polyester HBPE-G2 prepared in a preferred embodiment of the present disclosure, and an infrared spectrogram of a dendritic polymer which is prepared with the dendritic polyester and used as a blocking agent and a filtrate loss reducer, respectively.

FIG. 4 and FIG. 5 illustrate an infrared spectrogram of dendritic polyester HPAE-G2 prepared in a preferred embodiment of the present disclosure, and an infrared spectrogram of a dendritic polymer which is prepared with the dendritic polyester and used as a blocking agent and a filtrate loss reducer, respectively.

## DESCRIPTION OF THE PREFERRED EMBODIMENT

The dendritic polymer of the present disclosure comprises a core and a plurality of arms bonded to the core by the C-C single bond, wherein the core is a dendritic polyester, and the arms are obtained by means of polymerization of an alkenyl monomer, such as a non-ionic monomer and an anionic monomer.

The dendritic polyester contains a plurality of hydroxyl groups. Preferably, the dendritic polyester produces a first generation dendritic polyester by performing esterification reaction or transesterification reaction with a carboxyl (-COO-)-containing compound B comprising two or more hydroxyl groups (-OH) and using a compound A having two or more hydroxyl groups (-OH) as a matrix; the first generation dendritic polyester contains two or more hydroxyl groups, thus can continue the esterification reaction or transesterification reaction with a carboxyl (-COO-)-containing compound B comprising two or more hydroxyl groups (-OH) to obtain a second generation of dendritic polyester; and so on, a third generation of dendritic polyester, a fourth generation of dendritic polyester and a fifth generation of dendritic polyester can be prepared accordingly. As can be seen, each generation of dendritic polyester at least contains three or more hydroxyl groups (-OH). The many generations of dendritic polyester can be prepared by controlling a molar ratio of the compound A and the compound B, the one-time feeding reaction, the method is also called a nucleated one-step process, which has an advantage of simple preparation.

The esterification reaction produces an ester and water, the transesterification reaction produces an ester and an alcohol. The produced alcohol is generally a small-molecule substance (the lower alcohols such as methanol, ethanol, propanol, butanol). The water or lower alcohols produced during the reaction process is removed by reduced pressure distillation without affecting the subsequent reaction.

Preferably, at least two of the -OH groups of the compound A are in the form of hydroxymethyl group (-$CH_2OH$), i.e., in the form of terminal hydroxyl groups, thereby reducing steric hindrance of the hydroxyl groups and increasing

reactivity. More preferably, said compound A contains 3 or 4 or 5 or 6 hydroxymethyl groups ($-CH_2OH$), and a plurality of hydroxymethyl groups ($-CH_2OH$) may be linked to a single carbon atom or different carbon atoms. In particular, said compound A is preferably one or more selected from the group consisting of pentaerythritol, dipentaerythritol and trimethylolpropane.

Similarly, it is preferred that at least two -OH groups on the compound B are in the form of hydroxymethyl groups ($-CH_2OH$), thereby reducing the steric hindrance of the hydroxyl groups and increasing the reactivity. The compound B may be one or more of a monocarboxylic acid containing more than two terminal hydroxyl groups and esters thereof, the monocarboxylic acid, for example, contains 5-8 carbon atoms, the monobasic acid ester preferably contains 6-10 carbon atoms, the monobasic acid ester may contain one or more N atoms, preferably tertiary amine groups, and the alcohol forming the monobasic acid ester preferably has 1-4 carbon atoms. The present inventors have found that the presence of tertiary amine groups is conducive to enhancing the solubility of obtained dendritic polyester in water and the operation convenience during a synthesis process of said dendritic polymer, thus it is preferred in the present disclosure that the monobasic acid ester contains tertiary amine groups. Preferably, the compound B is one or more selected from the group consisting of 2,2-dimethylolpropionic acid, 2,2-dimethylolbutyric acid, 2,2-dimethylolpropionate methyl ester, 2,2-dimethylolpropionate ethyl ester, 2,2-dimethylolpropionate propyl ester, 2,2-dimethylolpropionate butyl ester, 2,2-dimethylolbutyrate butyl ester, 2,2-dimethylolbutyrate propyl ester, 2,2-dimethylolbutyrate butyl ester, N,N-dihydroxyethyl-3-aminopropionate methyl ester, N,N-dihydroxyethyl-3-aminopropionate methyl ester and N,N-dihydroxyethyl-3-aminopropionate butyl ester.

In other words, the dendritic polymer provided by the present disclosure comprises a terminal hydroxyl group dendritic polyester as a core, it is obtained by free radical polymerization of a terminal hydroxyl group dendritic polyester and an alkenyl monomer; said terminal hydroxyl group dendritic polyester is obtained by performing an esterification reaction between a polyol containing two or more terminal hydroxyl groups and a carboxylic acid containing two or more terminal hydroxyl groups, the carboxylic acid containing two or more terminal hydroxyl groups comprises or does not comprise a tertiary amine group; or said terminal hydroxyl group dendritic polyamine ester is obtained through a transesterification reaction between a polyol containing two or more terminal hydroxyl groups and a carboxylic acid ester containing two or more terminal hydroxyl groups, said carboxylic acid ester containing two or more terminal hydroxyl groups comprises or does not comprise a tertiary amine group.

Preferably, the dendritic polyester of the present disclosure is only composed of elements C, H, O, or merely composed of elements C, H, O, N, and constitutes a structure having a steric configuration composed of carbon-carbon bonds, carbon-oxygen bonds and carbon-nitrogen bonds, the presence of a hydrophobic cavity within the molecule, and the terminal hydroxyl groups distributed on the surface of outer layer, in order to ensure the structural stability of its center.

In accordance with a preferred embodiment of the present disclosure, the dendritic polymer has a grafting ratio of 50-100%, preferably 65-100%, more preferably 75-100%. The better effects of blocking and filtrate loss reduction can be achieved by controlling the grafting ratio within the preferred range.

In the present disclosure, the grafting ratio of said dendritic polymer reflects the number of arms, it can be calculated based on the peak area of hydrogen on methine of the secondary alcohol and the peak area of hydrogen on methylene group of the primary alcohol illustrated on the nuclear magnetic resonance hydrogen spectrum; the grafting ratio = (the peak area of hydrogen on methine of the secondary alcohol / the sum of the peak area of hydrogen on methine of the secondary alcohol and the peak area of hydrogen on methylene group of the primary alcohol) $\times$100%. Since the polymer has a large molecular weight, the concentration of the polymer in a solution prepared by dissolving the polymer in a solvent (deuterium substituted water) is limited during a measurement of the nuclear magnetic resonance hydrogen spectrum, the concentration of hydrogen on methine of the secondary alcohol and hydrogen on methylene group of the primary alcohol is relatively low, so that the measurement error may be large. The grafting ratio of the dendritic polymers obtained in examples of the present disclosure is between 65 and 95%.

According to a preferred embodiment of the present disclosure, the dendritic polymer has a root-mean-square radius of gyration within a range of 20-100nm, preferably 25nm-50nm, more preferably 25-30nm.

The root-mean-square radius of gyration is a constant that characterizes the molecular dimensions of polymers, it in general can be measured by the static laser light scattering method. The present disclosure uses a static type laser light scattering instrument to perform the measurement. The dendritic polymer of the present disclosure was formulated into a series of dilute solutions (with the concentrations of 10, 20, 30, 40, 50, 60, 70, 80, 90, 100mg/L) using distilled water as a solvent, the measurements and tests were performed on a HELEOS II laser light scattering instrument with a scan angle within a range of 30°-120°. Based on the collected data, the root-mean-square radius of gyration and the weighted average molecular weight of the dendritic polymer were calculated by the instrument with its built-in simulation software.

The better effects of blocking and filtrate loss reduction can be achieved by controlling the root-mean-square radius of gyration of the dendritic polymer within the aforesaid range.

The dendritic polymer of the present disclosure is obtained by free radical polymerization, that is, the carbon-carbon double bonds in an ethylene monomer are opened under the polymerization conditions, and grafted onto a core of dendritic polyester, and obtain long polymeric chain segments through the chain polymerization reaction, thus the dendritic

polymer does not contain polymerizable carbon-carbon double bonds, it can be detected by a bromine water test, the dendritic polymer cannot discolor the bromine water, indicating that the polymerizable carbon-carbon double bonds are not contained in the dendritic polymer. It is demonstrated by a bromine water test that the polymer in the examples of the present disclosure does not comprise the polymerizable carbon-carbon double bonds.

In accordance with a preferred embodiment of the present disclosure, the dendritic polymer has a weight average molecular weight within a range of 30,000-1,000,000 g/mol, preferably 50,000-500,000 g/mol, more preferably 50,000-400,000 g/mol, better blocking and filtrate loss reduction effects can be achieved by controlling the molecular weight within the aforesaid ranges.

According to a preferred embodiment of the present disclosure, a molar ratio of the dendritic polyester to the alkenyl monomer is within a range of 1:50 to 1:1,000. The better effects of blocking and filtrate loss reduction can be achieved by arranging the molar ratio within the preferred range.

The dendritic polymer provided by the present disclosure is derived from free radical polymerization reaction of terminal hydroxyl dendritic polyester and an alkenyl monomer, thus the dendritic polymer contains a large number of hydroxyl groups (primary hydroxyl groups and secondary hydroxyl groups); in addition, by selecting an appropriate alkenyl monomer, the chain links constituting the arms may comprise a significant number of sulfonic acid groups. It is expectable that the dendritic polymer has a strong water solubility, preferably, an aqueous solution containing 1wt% of the dendritic polymer has an apparent viscosity within a range of 4-50mPa·s, preferably 8-35mPa·s, more preferably 10-20mPa·s. The desirable water solubility properties will allow the dendritic polymer, when used in a drilling fluid, to have the effects of convenient formulation, better filtrate loss reduction, and maintaining the colloidal stability of the drilling fluid system.

In the present disclosure, the apparent viscosity of an aqueous solution containing 1wt% of the dendritic polymer was measured under room temperature condition according to the method stipulated in the National Standard GB/T16783.1 of China.

Preferably, the dendritic polymer of the present disclosure is obtained from the free radical polymerization reaction of a dendritic polyester and an alkenyl monomer. The generation number of the dendritic polyester is from the $1^{st}$ generation to the $5^{th}$ generation.

The generation number is approximately determined by measuring the relative molecular weight of said dendritic polyester by the gel permeation chromatography and measuring the size of particles in the solution by the laser scattering method.

In theory, the alkenyl monomers may be any kind of monomers which comprise unsaturated carbon-carbon double bonds and are capable of bonding to the dendritic polyester through the free radical polymerization reaction. In order to obtain desirable filtrate loss reduction property and blocking performance, the alkenyl monomers in the present disclosure comprise an anionic monomer and a non-ionic monomer. The non-ionic monomer is one or more of various acrylamide monomer, chain or cyclic N-vinyl amide monomer. Preferably, the non-ionic monomer is one or more selected from the group consisting of acrylamide, N,N-dimethylacrylamide, N-ethylacrylamide, N,N-diethylacrylamide, N-propylacrylamide, N-isopropylacrylamide, N-vinylformamide, N-vinylacetamide, N-vinyl-N-methylacetamide, N-vinylpyrrolidone and N-vinylcaprolactam; the anionic monomer is a polymerizable monomer having carboxyl-COOH and/or sulfonic acid groups-$SO_3H$, such as one or more selected from the group consisting of acrylic acid, methacrylic acid, 2-acrylamido-2-methylpropane sulfonic acid and 2-acryloxy-2-methylpropane sulfonic acid. Preferably, the anionic monomer contains 2-acrylamido-2-methylpropane sulfonic acid and/or 2-acryloxy-2-methylpropane sulfonic acid, in order to improve the temperature resistance and salt resistance of the polymer/drilling fluid.

In the present disclosure, the alkenyl monomer may further comprise a cationic monomer, and the cationic monomer may be one or more selected from the group consisting of dimethyldiallyl ammonium chloride, acryloxyethyltrimethyl ammonium chloride and methacryloxyethyltrimethyl ammonium chloride.

In order to meet the requirements of filtrate loss reduction and blocking effects of the drilling fluids, the present disclosure develops a novel polyester dendritic polymer comprising a dendritic polyester as a core and its surface grafted with a plurality of molecular chains having filtrate loss reduction effects; because the molecule as a whole has a three-dimensional steric configuration, and a plurality of long chains are grafted on the hydrophobic dendritic polyester core, which can alleviate or eliminate the effects that the chain polymer filtrate loss reducer suffers from a chain scission under the high temperature, and also weaken the molecular chain curling in an environment of high concentration of monovalent and divalent salt. The dendritic polymer prepared in the present disclosure has steric configuration and self-assembled micellar morphology, and exhibits strong resistance to high temperature and high salinity, and has excellent blocking performance.

According to a preferred embodiment of the present disclosure, the dendritic polymer provided by the present disclosure has the structure shown in Formula I (Formula I illustrates a planar structure, which is exactly a three-dimensional solid structure), in the Formula I, the core of a dendritic polymer resides inside the dashed circle, the wavy lines outside the dashed line illustrate the arms grafted to the core, and the arms are grafted to the core after opening of the polymerizable carbon-carbon double bonds.

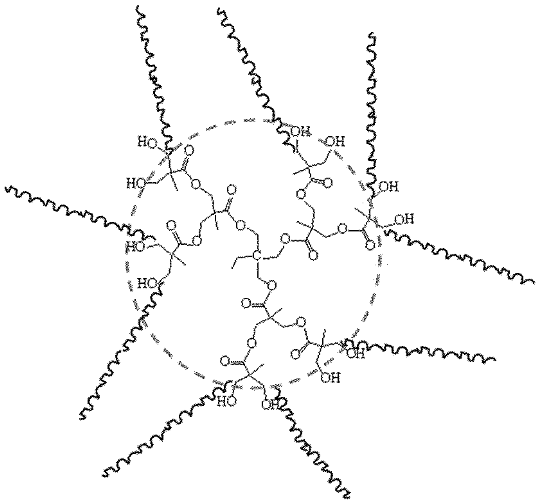

Formula I

Wherein the core has a structure represented by Formula (1) and/or a structure represented by Formula (2) and a structure corresponding to the 3rd generation to the 5th generation thereof;

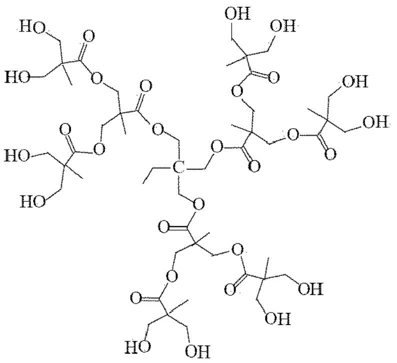

Formula (1)

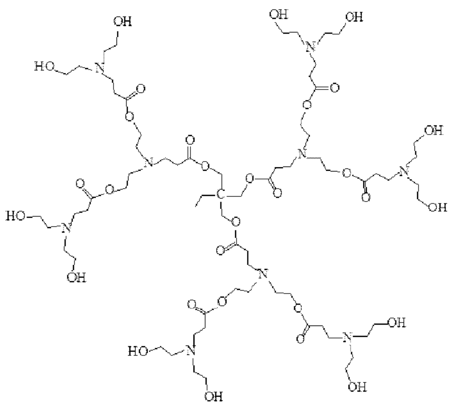

Formula (2)

The arm is a polymeric segment comprising an anionic monomer structural unit and a non-ionic monomer structural unit and optionally a cationic monomer structural unit, wherein the anionic monomer structural unit is sulfonic acid (sulfonate) represented by Formula (3) and/or Formula (3') and/or carboxylic acid (carboxylate) represented by Formula (4);

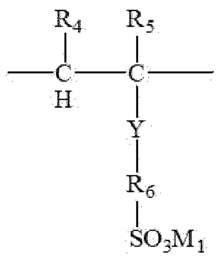 Formula (3),

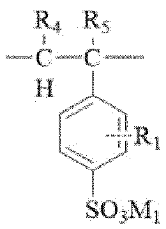 Formula (3'),

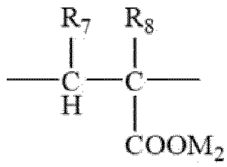 Formula (4)

In the above Formula (3), Formula (3'), or Formula (4), each of $R_1$, $R_4$, $R_5$, $R_7$, $R_8$ is H or $C_1$-$C_5$ straight or branched chain alkyl, $R_6$ is $C_1$-$C_5$ straight or branched chain alkylene, each of $M_1$ and $M_2$ is independently H, $NH_4$ or an alkali metal element, and Y is

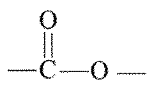

or

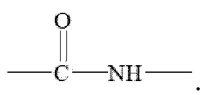

In Formula (3'), $R_1$ may be located at the ortho-position or meta-position of the group $-SO_3M_1$.

The non-ionic monomer structural unit has one or more of the structures represented by Formulae (5)-(7);

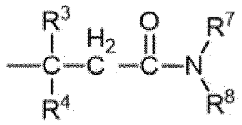 Formula (5);

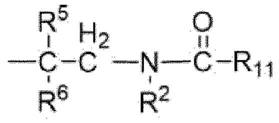 Formula (6);

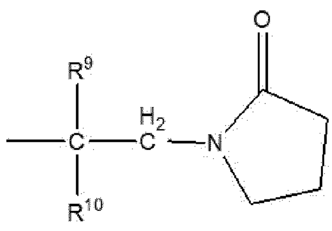 Formula (7)

In the above Formulae (5)-(7), each of $R^2$, $R^3$, $R^4$, $R^5$, $R^6$, $R^7$, $R^8$, $R^9$, $R^{10}$ and $R_{11}$ is H or a $C_1$-$C_5$ straight or branched chain alkyl.

Preferably, a molar ratio of the anionic monomer to the non-ionic monomer is 0.5-2.5:1, preferably 1-2:1. Particularly preferably, the anionic monomer structural units are either AMPS or AMPS and other sulfonic acid monomer structural units. It is further preferred in the present disclosure that a weight ratio of sulfonic acid (sulfonate) represented by Formula (3) and/or Formula (3') in the arm relative to the non-ionic monomer structural units other than the acrylamide monomer represented by Formula (5) with $R^7$ and $R^8$ being H is 4-1:1.

Each arm per se may be a block copolymerization chain segment or a random copolymer.

A second aspect of the present disclosure provides a method for preparing a filtration loss reducer comprising the following steps: contacting a dendritic polyester with an alkenyl monomer containing an anionic monomer and a non-ionic monomer under the free radical polymerization reaction conditions, the removing the unreacted monomer and solvent, the free radical polymerization conditions cause that the produced polymer has a weight average molecular weight of 30,000-1,000,000g/mol; the alkenyl monomer contains a non-ionic monomer and an anionic monomer.

The chemical reaction formula for the above-described polymerization reaction is illustrated with reference to FIG. 1. The product in FIG. 1 is a dendritic polymer, the right-side structure in the polymer shows a chemical structure schematic diagram of a polymer molecule chain segments containing an alkenyl monomer, and the other polymer molecule chain segments containing an alkenyl monomer are represented by wavy lines.

A preparation method of a dendritic polyester is exemplified by a second generation terminal hydroxyl dendritic polyester shown below. The structural formula of the second generation terminal hydroxyl dendritic polyester is shown below, the second generation terminal hydroxyl dendritic polyester contains trimethylolpropane as a core, wherein each of three hydroxyl groups in the trimethylolpropane is disposed at a terminal position, the three hydroxyl groups are subjected to esterification reaction with carboxyl groups of 2,2-dimethylolpropionic acid, a first generation of the terminal hydroxyl dendritic polyester is obtained after the esterification process. Given that the 2,2-dimethylolpropionic acid per se contains two terminal hydroxyl groups, the terminal hydroxyl groups are introduced as a result of synthesizing a first generation terminal hydroxyl dendritic polyester, thus the terminal hydroxyl groups can carry out esterification reaction with another 2,2-dimethylolpropionic acid, to obtain a second generation terminal hydroxyl dendritic polyester as shown below in structural formula (8).

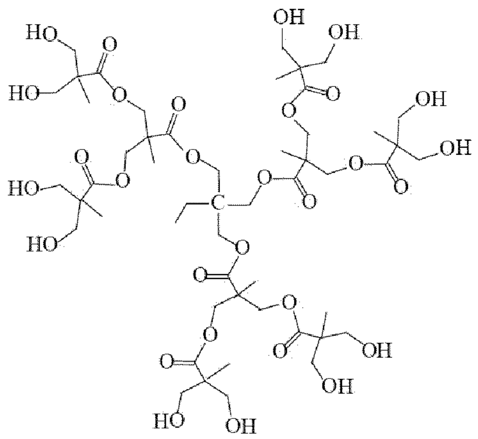

Formula (8)

For convenience of description, the second generation terminal hydroxyl dendritic polyester can be denoted by HBPE-G2, wherein the HBPE represents a terminal hydroxyl dendritic polyester, and G2 represents a second generation.

Similarly, a preparation method of the present disclosure is described by taking another second generation hydroxyl dendritic polyamine ester (since its structure contains nitrogen atom N, the term "polyamine ester" is used to show the distinction) as an example, wherein the structural formula of the second generation terminal hydroxyl dendritic polyamine ester is shown below, the second generation terminal hydroxyl dendritic polyamine ester contains trimethylolpropane as a core, each of three hydroxyl groups in the trimethylolpropane is disposed at a terminal position, the three hydroxyl groups are subjected to transesterification reaction with N,N-dihydroxyethyl-3-aminopropionate methyl ester, a first generation of the terminal hydroxyl dendritic polyamine ester is obtained after the transesterification. Given that the N,N-dihydroxyethyl-3-aminopropionate methyl ester per se contains two terminal hydroxyl groups, the terminal hydroxyl groups are introduced as a result of synthesizing a first generation terminal hydroxyl dendritic polyamine ester, thus the terminal hydroxyl groups can carry out transesterification with another N,N-dihydroxyethyl-3-aminopropionate methyl ester, to obtain a second generation terminal hydroxyl dendritic polyamine ester as shown below in structural formula (9).

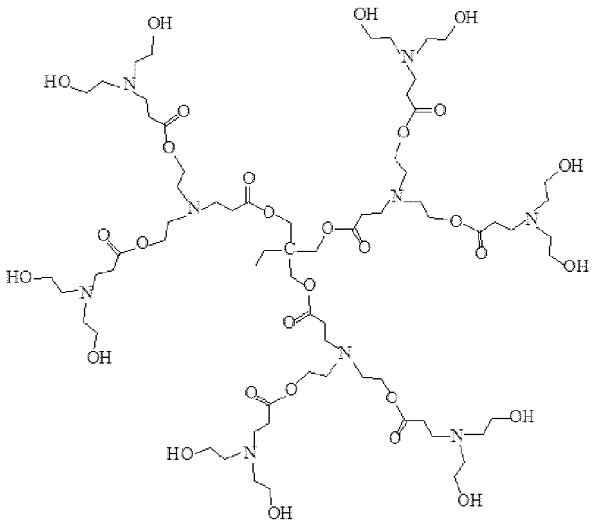

Formula (9)

The anionic monomer and non-ionic monomer may be various polymerizable monomers which can be used for preparing the filtrate loss reducer product; preferably, the anionic monomer is sulfonic acid (sulfonate) represented by Formula (I) and/or carboxylic acid (carboxylate) represented by Formula (II) below;

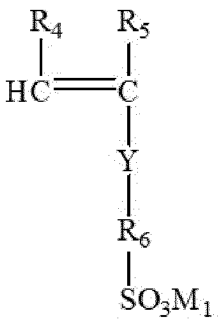 Formula (I), 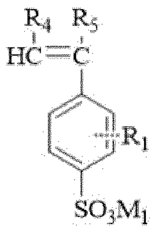 Formula (I'),

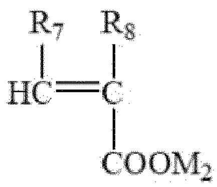 Formula (II)

In the above formula (I), formula (I'), or formula (II), each of $R_1$, $R_4$, $R_5$, $R_7$, $R_8$ is H or $C_1$-$C_5$ straight or branched chain alkyl, $R_6$ is $C_1$-$C_5$ straight or branched chain alkylene, $M_1$ and $M_2$ are each independently H, $NH_4$ or an alkali metal element, and Y is

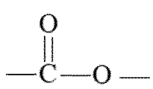 or 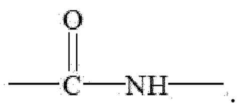.

. In Formula (3'), $R_1$ may be located at the ortho-position or meta-position of the group $-SO_3M_1$.

Preferably, the non-ionic monomer has one or more of the structures represented by Formulae (III)-(V) below;

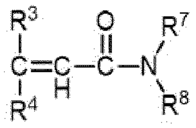 Formula (III); 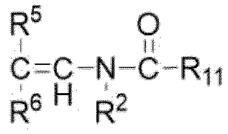 Formula (IV);

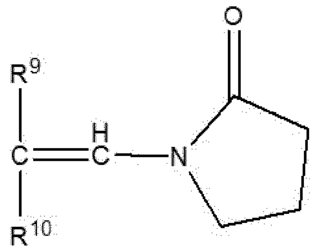 Formula (V)

In formulae (III)-(V), each of $R^2$, $R^3$, $R^4$, $R^5$, $R^6$, $R^7$, $R^8$, $R^9$, $R^{10}$, and $R_{11}$ is H or $C_1$-$C_5$ straight or branched chain alkyl.

According to a preferred embodiment of the present disclosure, a molar ratio of the anionic monomer to the non-ionic monomer is 0.5-2.5:1, preferably 1-2:1; preferably, a weight ratio of sulfonic acid (sulfonate) represented by Formula (I) and/or Formula (I') relative to the non-ionic monomer other than the acrylamide monomer represented by Formula (II) with $R^7$ and $R^8$ being H is 4-1:1.

According to a preferred embodiment of the present disclosure, the solvent of the polymerization reaction is water.

In the present disclosure, the mode of initiating polymerization may be at least one of the initiator-initiated polymerization, ultraviolet light-initiated polymerization and microwave-initiated polymerization.

Preferably, the initiator in in the initiator-initiated polymerization may be one or more selected from the group consisting of tetravalent cerium ($Ce^{4+}$) compound, pentavalent vanadium ($V^{5+}$) compound, hexavalent chromium ($Cr^{6+}$) compound, trivalent manganese ($Mn^{3+}$) compound and divalent iron ($Fe^{2+}$) compound, more preferably a tetravalent cerium salt; for example, at least one of ammonium cerium nitrate, ammonium cerium sulfate, ammonium cerium phosphate and ceric sulfate.

In the present disclosure, it is preferred that the polymerization reaction conditions comprise a pH of 5-8, an oxygen-free environment, a temperature of 10-70 °C and a time of 1-20 hours.

In the present disclosure, the term "oxygen-free" means that the oxygen content is below 0.5mg/L, and an oxygen-free environment can be achieved by replacing oxygen gas with nitrogen gas and performing protection under nitrogen gas.

Various methods can be used to remove unreacted monomers and solvents, such as removing the solvents by means of drying, or washing with ethanol.

Preferably, the reaction is stopped after the temperature in the reaction bottle is reduced to room temperature, so that a viscous solution or a gel is obtained; the viscous solution is treated with ethanol, then dried and pulverized to obtain a filtrate loss reducer product; the gel is subjected to a shearing, pelleting, drying, and grinding process to obtain a filtrate loss reducer product. The filtrate loss reducer product not only has the filtrate loss reduction function, but also exhibits desirable blocking performance.

The dendritic polymer prepared by polymerization of a hydroxyl terminated dendritic poly(amine) ester with an alkenyl monomer is used in drilling fluids as plug filter loss reducer, its mass concentration is within a range of 0.2-5wt%, preferably 0.5-3wt%, can effectively decrease permeability of mud cakes, plug the micro-pores, and reduce the filtrate loss amount.

Compared with the prior art, the present disclosure has the following favorable effects:

(1) The dendritic polymer of the present disclosure has excellent blocking and filtrate loss reducer properties, effectively reduces permeability of mud cakes while significantly reducing the filtrate loss amount, can effectively plug micro-cracks and micro-pores on the borehole wall, and balance the dual effects of blocking and reducing filtrate loss.

(2) The dendritic polymer of the present disclosure can be used as the blocking agent and filtrate loss reducer, the polymer comprise a relatively large number of long chains having different functional groups grafted on the dendritic poly(amine) ester containing a large number of terminal hydroxyl groups, the dendritic poly(amine) ester of the central core is dispersible or soluble in water, the molecules have a steric configuration, and further grafted with long branch chains derived from polymerization of the monomers, it is structurally stable at high temperatures and does not collapse, and the high temperature chain scission of local long branch chains has less influence on the properties,

thereby enhancing the temperature resistance of the dendritic polymer. In contrast to the linear copolymer, the dendritic polymer has a steric configuration, which reduces its molecular chain curling in a high concentration of calcium salt environment such as sodium chloride, potassium chloride and calcium chloride, further increases the resistance to monovalent and divalent salts, and the core of said dendritic polymer also has a hydrophobic effect, it is capable of further increasing the temperature resistance, thus the temperature resistance and salt resistance of the dendritic polymer is significantly superior to those of the linear polymer.

(3) The different generation dendritic poly(amine) esters of the present disclosure can be synthesized in an one-step reaction, the synthesis process is performed in a simple and easy manner. The preparation method of the dendritic polymer used as a blocking agent and a filtrate loss reducer have many advantages, such as the polymerization reaction conditions are mild and can be easily controlled, the raw materials are readily available, thereby facilitating the industrial production.

The present disclosure will be further described in detail below with reference to the specific examples.

Unless otherwise specified, the reagents and materials in the following examples are commercially available; % w/w denotes a mass percent; unless otherwise specified, % refers to the mass percent. Since the dendritic polymers synthesized by the present disclosure are primarily used for blocking and performing filtrate loss reduction, the synthesized dendritic polymers are also referred to in the Examples as dendritic polymer blocking agent and filtrate loss reducer.

The preparation process of the different generation dendritic polymer (HBPE-Gn, HBPE denoted terminal hydroxyl polyester, G represented the "generation", n denoted the generation number) was described by taking HBPE-G2 as an example: 2.68g of trimethylolpropane (with a molecular weight of 134) and 24.12g of 2,2-dimethylolpropionic acid (with a molecular weight of 134) were added into a three-neck flask with a volume of 250mL, the oxygen gas therein was purged by introducing nitrogen gas, the flask was heated, 0.5g of trifluoromethanesulfonic acid was added, a water knockout trap was installed, the temperature was raised to 130-150°C, the reaction was performed for 3 hours under the protection of nitrogen gas, the three-neck flask was evacuated and dehydrated, the temperature was decreased to below 70°C, tetrahydrofuran was added and stirred, n-hexane was used for precipitation, n-hexane was poured out, the fixed amount of tetrahydrofuran (comprising terminal hydroxyl dendritic polyester in an amount of 50% w/w) was added. The terminal hydroxyl dendritic polyester with a generation number of the third generation can be obtained by feeding trimethylolpropane and 2,2-dimethylolpropionic acid in a molar ratio of 1:21, thus the higher or lower generation terminal hydroxyl dendritic polyester may be prepared in a similar fashion. The HBPE-G2 obtained in the present disclosure was purified for removing the unreacted raw materials and subjected to drying for removing solvents, and then subjected to an infrared spectroscopy test, the results were shown in FIG. 2, wherein the strong peak at 3420$cm^{-1}$ was hydroxyl peak, the peaks at 2980$cm^{-1}$ and 2885$cm^{-1}$ were stretching vibration peaks of methyl and methylene respectively, the peak at 1730$cm^{-1}$ was carbonyl peaks in the ester group, the peak at 1043$cm^{-1}$ was C-O stretching vibration peaks in the terminal hydroxyl, indicating that the product was terminal hydroxyl dendritic polyester. The weight average molecular weight measured by the Gel Permeation Chromatography (GPC) method was about 1,100 g/mol, and the molecular weight measured by gas chromatograph-mass spectrometer was within a range of 1060-1290 g/mol.

The preparation process of the different generation dendritic polyamine ester (HPAE-Gm, HPAE denoted terminal hydroxyl polyamine ester, G represented the "generation", m denoted the generation number) was described by taking HPAE-G2 as an example: 1.34g of trimethylolpropane (with a molecular weight of 134) and 17.19g of N,N-dihydroxyethyl-3-aminopropionate methyl ester (with a molecular weight of 191, the compound was prepared by using the methyl acrylate and diethanolamine as the starting materials, and synthesized with reference to the method described in "Synthesis of A Terminal Hydroxyl Polyamide-amine Type Molecule" in *Synthesis Chemistry,* 2017, 25 (02)) were added into a three-neck flask with a volume of 100mL, 0.25g of p-toluenesulfonic acid was added, nitrogen gas was introduced, the flask was heated to 120°C under a stirring condition, the reaction was performed for 2 hours under the protection of nitrogen gas, the vacuumizing was performed twice during the reaction process, the vacuumizing was further performed for more than 30min after completion of the reaction, the temperature was decreased to prepare a yellowish transparent viscous liquid, which was exactly the second generation terminal hydroxyl dendritic polyamine ester. The terminal hydroxyl dendritic polyamine ester with a generation number of the third generation can be obtained by feeding trimethylolpropane and N,N-dihydroxyethyl-3-aminopropionate methyl ester in a molar ratio of 1:21, thus the higher or lower generation terminal hydroxyl dendritic polyamine ester may be prepared in a similar fashion. The HPAE-G2 obtained in the present disclosure was purified for removing the unreacted raw materials and subjected to drying for removing solvents, and then subjected to an infrared spectroscopy test, the results were shown in FIG. 4, wherein the strong peak at 3380$cm^{-1}$ was hydroxyl peak, the peaks at 2946$cm^{-1}$ and 2880$cm^{-1}$ were peaks of methyl and methylene, the peak at 1730$cm^{-1}$ was carbonyl peaks in the ester group, the peaks near 1620$cm^{-1}$ and 1460$cm^{-1}$ were deformation vibration peaks of methyl and methylene respectively, the peak at 1050$cm^{-1}$ was C-O stretching vibration peaks in the terminal hydroxyl, indicating that the product was terminal hydroxyl dendritic polyamine ester. The weight average molecular weight measured by the GPC method was about 1,500 g/mol, and the molecular weight measured by gas chromatograph-mass spectrometer was within

a range of 1240-1720 g/mol.

Example 1

400 mL deionized water was added into a 1,000mL reaction flask, 3.0g of a tetrahydrofuran solution of the terminal hydroxyl dendritic polyester HBPE-G2 was added to the reaction flask, the mixture was uniform after subjected to an ultrasonic dispersion, 1.5g acrylamide, 20.0g 2-acrylamido-2-methylpropanesulfonic acid, 10.0g N,N-dimethylacrylamide were added, then stirred and dissolved uniformly, pH was subsequently adjusted to 6.0 with NaOH solution having a concentration of 30wt%, nitrogen gas was introduced for removing oxygen gas, the temperature was raised to 45°C, 5mL aqueous solution dissolved with 0.05g of cerium ammonium nitrate was added under the stirring process. After the temperature in the reaction flask was decreased to room temperature, the reaction was stopped, a viscous solution was obtained, which was treated with ethanol, the unreacted small molecules were removed, the treated solution was subjected to drying and grinding to prepare the dendritic polymer blocking agent and filter loss reducer.

Examples 2-8

The dendritic polymers were prepared according to the method in Example 1, except that the feedstock types, addition amounts and the reaction conditions were shown in Table 1 below.

Wherein the infrared spectrogram of the dendritic polymer prepared in Example 6 was shown in FIG. 3.

Comparative Example 1

The dendritic polymer was prepared according to the method in Example 1, except that the feedstock type, addition amount and the reaction conditions were shown in Table 1 below.

Table 1

| | Example | | | | | | | | Comparative Example |
|---|---|---|---|---|---|---|---|---|---|
| | 1 | 2 | 3 | 4 | 5 | 6 | 7 | 9 | 1 |
| AMPS | 20g | 30g | 30g | 25g | 10g | 15g | 20g | 15g | 15g |
| Acrylic acid | | | | | 5g | 5g | | | 5g |
| Acrylamide | 1.5g | | 2.5g | | | 10g | 10g | 2.5g | 10g |
| N,N-dimethylacryl amide | 10g | | 7.5g | 5g | | | | | |
| N-vinylcarboxamid e | | | | 5g | 5g | | | | |
| N-vinyl-2-pyrrolidi none | | 10g | | | 10g | | 5g | 10g | |
| Acryloyloxyethyltri methyl ammonium chloride | | | | | | | 2g | | |
| HBPE-G1 | | | | | | | 6g | | |
| HBPE-G2 | 3g | 6g | | | 4g | 4g | | 4g | |
| HBPE-G3 | | | | 6g | | | | | |
| HBPE-G4 | | | 6g | | | | | | |
| Cerium ammonium nitrate | 0.05g | 0.1g | 0.15g | 0.2g | 0.15g | 0.15g | | 0.15g | |
| Ultraviolet rays | | | | | | | √ | | Note① |
| pH | 6.0 | 6.5 | 6.5 | 6.5 | 6.5 | 7.0 | 7.5 | 6 | 7.5 |
| Temperature(°C) | 45 | 45 | 65 | 45 | 40 | 35 | 50 | 55 | 50 |
| Note: ① 3mL aqueous solution dissolved with 0.05g ammonium persulfate and 3mL aqueous solution dissolved with 0.05g sodium bisulfite were used as an initiator. | | | | | | | | | |

The relevant properties of the obtained copolymers were shown below in Table 2.

Table 2

| | Root-mean-square radius of gyration/nm | Weight average molecular weight /$10^4$g/mol | Apparent viscosity of an aqueous solution with a concentration of 1wt% /mPa·s | Grafting ratio /% |
|---|---|---|---|---|
| Example 1 | 39 | 17.7 | 12.5 | 90% |
| Example 2 | 33 | 19.5 | 9 | 95% |
| Example 3 | 35 | 16.2 | 10.5 | 85% |
| Example 4 | 30 | 22.3 | 16.5 | 80% |
| Example 5 | 41 | 29.1 | 14 | 75% |
| Example 6 | 45 | 25.4 | 7.5 | 75% |
| Example 7 | 46 | 32.4 | 18 | 80% |
| Example 8 | 37 | 22.7 | 11.5 | 65% |
| Comparative Example 1 | 156 | 27.1 | 33 | - |

Example I

300 mL deionized water was added into a 500mL reaction flask, 1.0g of terminal hydroxyl dendritic polyamine ester HPAE-G3 was added, the dendritic polyamine ester was uniformly dissolved under the mechanical stirring condition, 2.5g of N-vinylformamide, 10.0g of 2-acrylamido-2-methylpropanesulfonic acid and 5.0g of N,N-dimethylacrylamide were further added, then stirred and dissolved uniformly, pH was subsequently adjusted to 6.5 with the NaOH solution having a concentration of 30wt%, nitrogen gas was introduced for removing oxygen gas, the temperature was raised to 60°C, 5mL aqueous solution dissolved with 0.15g of cerium ammonium nitrate was added to initiate the polymerization reaction. After the flask was cooled to room temperature, a viscous solution was obtained, which was treated with ethanol, to remove unreacted small molecules and have polymers precipitated, the settled substance was then subjected to drying and sequentially grinding to prepare the polyamine ester dendritic polymer blocking agent and filter loss reducer.

Examples II-VIII

The dendritic polymers were prepared according to the method in Example I, except that the feedstock types, addition amounts and the reaction conditions were shown in Table 3 below.

Wherein the infrared spectrogram of the dendritic polymer prepared in Example VI was shown in FIG. 5.

Comparative Examples I-II

The dendritic polymers were prepared according to the method in Example VI, except that the feedstock types, addition amounts and the reaction conditions were shown in Table 3 below.

Table 3

| | Example | | | | | | | | Comparative Example | |
|---|---|---|---|---|---|---|---|---|---|---|
| | I | II | III | IV | V | VI | VII | VIII | I | II |
| AMPS | 10g | 11g | 12.5g | 12.5g | 10g | 10g | 10g | 10g | 10g | |
| Sodium p-styrene sulfonate | | 1g | | | | | | | | |
| Acrylic acid | | | | | | 4g | | | 4g | |
| Acrylamide | | 2.5g | | | 2.5g | 3g | 5g | 5g | 3g | 17.5g |

(continued)

| | Example | | | | | | | | Comparative Example | |
|---|---|---|---|---|---|---|---|---|---|---|
| | I | II | III | IV | V | VI | VII | VIII | I | II |
| N,N-dimethylacrylamide | 5g | 4g | 5g | | 5g | | | | | |
| N-vinylcarboxamide | 2.5g | | | | | | 1.5g | | | |
| N-vinyl-2-pyrrolidinone | | | | 5g | | | | | | |
| Acryloyloxyethyltrimethyl ammonium chloride | | | | | | | | 2g | | |
| HPAE-G1 | | | | | | | 2g | | | |
| HPAE-G2 | | 2g | | | | 0.5g | | 1g | | 1g |
| HPAE-G3 | 1g | | | | 1g | | | | | |
| HPAE-G4 | | | 2g | 2g | | | | | | |
| Cerium ammonium nitrate (g) | 0.15 | 0.15 | 0.1 | 0.1 | 0.1 | 0.1 | 0.08 | | | 0.1 |
| Ultraviolet rays | | | | | | | | √ | Note② | |
| pH | 6.5 | 6.5 | 6.5 | 6.5 | 6.5 | 7.0 | 6 | 7.5 | 7.0 | 6.5 |
| Temperature (°C) | 60 | 65 | 65 | 65 | 65 | 40 | 50 | 50 | 40 | 65 |
| Note: ② 3mL aqueous solution dissolved with 0.03g ammonium persulfate and 3mL aqueous solution dissolved with 0.03g sodium bisulfite were used as an initiator. | | | | | | | | | | |

The relevant properties of the obtained copolymers were shown below in Table 4.

Table 4

| | Root-mean-square radius of gyration/nm | Weight average molecular weight /$10^4$g/mol | Apparent viscosity of an aqueous solution having a concentration of 1wt% mPa·s | Grafting ratio /% |
|---|---|---|---|---|
| Example I | 25 | 18.2 | 14 | 85% |
| Example II | 27 | 19.7 | 15 | 90% |
| Example III | 26 | 18.4 | 13 | 90% |
| Example IV | 25 | 17.7 | 11.5 | 85% |
| Example V | 39 | 24.2 | 17.5 | 75% |
| Example VI | 42 | 35.0 | 19 | 75% |
| Example VII | 37 | 28.6 | 17 | 65% |
| Example VIII | 33 | 25.3 | 16.5 | 65% |
| Comparative Example I | 117 | 36.1 | 35 | - |
| Comparative Example II | 42 | 26.8 | 21 | 95% |

Evaluation of the blocking and filtrate loss reduction effects

(1) Medium pressure filtrate loss amount test:

(i) Preparation and evaluation of a saline water base drilling fluid (comprising bentonite in an amount of 4wt% and

NaCl in an amount of 10wt%): 300mL deionized water was added to a mud cup, 0.6g anhydrous sodium carbonate was added, 12.0g bentonite was then added under a high-speed stirring condition (10,000-11,000rpm), the high-speed stirring was performed for 20min, the mixture was cured and hydrated at room temperature for 24 hours, 30g sodium chloride was added and subjected to high-speed stirring for 10min, such that the base drilling fluid (comprising bentonite in an amount of 4wt% and NaCl in an amount of 10wt%) was obtained. The base drilling fluid was poured into an aging cell, and subjected to hot-rolling and aging at 180°C (and 220°C) for 16h, and then cooled to room temperature, and subjected to high-speed stirring for 5 min, the medium pressure filtrate loss amount was measured, the results were 178mL (and 216mL).

(ii) 6.0g of the products prepared in the above Examples and Comparative Example were respectively added into 300mL of base drilling fluid (comprising bentonite in an amount of 4wt% and NaCl in an amount of 10wt%), and subjected to high-speed stirring such that the mixture was dissolved uniformly, the mixture was poured into a high-temperature aging tank, and subjected to hot-rolling and aging at 180°C (and 220°C) for 16h, and then cooled to room temperature, and subjected to high-speed stirring for 5 min, the medium pressure filtrate loss amount was measured, the results were illustrated in Table 5.

(2) Blocking performance evaluation:

(i) The base drilling fluid (comprising bentonite in an amount of 4wt% and NaCl in an amount of 10wt%), which had been subjected to hot-rolling at 180°C for 16h, was tested on a medium pressure filtrate loss amount kit at room temperature and sequentially on another filtrate loss and blocking performance instrument under high temperature and high pressure (the filtering medium was FANN ceramic core, the test pressure was 3.5MPa, the temperature was 150°C). 152mL of filtrate was collected at 30 min.

(ii) The base drilling fluid added with samples (comprising bentonite in an amount of 4wt%, NaCl in an amount of 10wt%, and product prepared in Examples and Comparative Examples in an amount of 2wt%), which had been subjected to hot-rolling at 180°C for 16h, was tested on a medium pressure filtrate loss amount kit at room temperature and sequentially on another filtrate loss and blocking performance instrument under High Temperature and High Pressure (the filtering medium was FANN ceramic core, the test pressure was 3.5MPa, the temperature was 150°C). The filtrate obtained after testing for 30 min was collected. The blocking ratio was calculated according to the following formula. The results were shown in Table 5.

$$\text{Blocking ratio} = (FL_0 - FL)/FL_0 \times 100\%$$

Wherein $FL_0$ denoted the volume of filtrate collected from the base drilling fluid (comprising bentonite in an amount of 4wt% and NaCl in an amount of 10wt%) at 30min, mL; *FL* denoted the volume of filtrate collected from the base drilling fluid added with sample at 30min, mL.

Table 5

| | Medium pressure filtrate loss amount /mL | | Blocking ratio /% |
|---|---|---|---|
| | After 180°C/16h | After 220°C/16h | |
| Example 1 | 9.8 | 11.2 | 90.0 |
| Example 2 | 9.2 | 10.2 | 89.1 |
| Example 3 | 9.6 | 11.4 | 89.6 |
| Example 4 | 9.0 | 10.7 | 89.3 |
| Example 5 | 16.6 | 21.6 | 84.9 |
| Example 6 | 14.2 | 19.5 | 80.0 |
| Example 7 | 17.8 | 24.2 | 86.0 |
| Example 8 | 19.2 | 27.4 | 86.8 |
| Comparative Example 1 | 42.8 | 78.4 | 64.1 |
| Example I | 5.8 | 8.2 | 89.3 |

(continued)

| | Medium pressure filtrate loss amount /mL | | Blocking ratio /% |
|---|---|---|---|
| | After 180°C/16h | After 220°C/16h | |
| Example II | 6.4 | 8.4 | 89.3 |
| Example III | 5.6 | 7.8 | 89.7 |
| Example IV | 6.0 | 8.0 | 89.5 |
| Example V | 18.3 | 19.2 | 88.0 |
| Example VI | 16.3 | 21.6 | 88.2 |
| Example VII | 12.8 | 25.2 | 82.9 |
| Example VIII | 11.2 | 17.4 | 85.3 |
| Comparative Example I | 25.4 | 48.4 | 56.8 |
| Comparative Example II | 36.3 | 67.8 | 65.0 |

As can be seen from the results of Table 5, the filtrate loss reducer prepared by using a terminal hydroxyl dendritic polyester as a core, was added into the bentonite slurry containing sodium chloride in an amount of 10%, the slurry was subjected hot-rolling at 180°C and 220°C for 16h, can significantly reduce the filtrate loss amount, and exhibit desirable blocking performance for the fine pores of ceramic sand pan, its blocking ratio to the ceramic filter disc may be 80% or more, much higher than the polymer filtrate loss reducer in the Comparative Examples without containing a dendritic polyester as a core.

## Claims

1. A dendritic polymer comprising a dendritic polyester as a core, and a plurality of arms obtained by means of polymerization of an alkenyl monomer; the root-mean-square radius of gyration of the dendritic polymer does not exceed 100 nm, wherein the root-mean-square radius of gyration of the dendritic polymer is determined as specified in the description; the alkenyl monomer contains a non-ionic monomer and an anionic monomer, wherein the non-ionic monomer is one or more selected from the group consisting of acrylamide monomers, chain and cyclic N-vinyl amide monomers, and the anionic monomer is a polymerizable monomer having carboxyl-COOH and/or sulfonic acid groups-$SO_3H$.

2. The dendritic polymer according to claim 1, wherein the dendritic polymer has a grafting ratio of 50-100%, preferably 80-95%;

   and/or, wherein the dendritic polymer has a root-mean-square radius of gyration within a range of 20-100nm, preferably 25nm-50nm, more preferably 25-40nm;
   and/or, wherein the dendritic polymer has a weight average molecular weight within a range of 30,000-1,000,000g/mol, preferably 50,000-500,000g/mol, more preferably 100,000-300,000g/mol, wherein the weight average molecular weight is measured by the gel permeation chromatography method;
   and/or, wherein an aqueous solution containing 1wt% of the dendritic polymer has an apparent viscosity within a range of 4-50mPa·s, preferably 5-20mPa·s, more preferably 10-15mPa·s, wherein the apparent viscosity is measured as specified in the description.

3. The dendritic polymer according to claim 1 or 2, wherein the dendritic polyester is obtained by polycondensation of a polyol containing more than two terminal hydroxyl groups with a carboxylic acid containing more than two terminal hydroxyl groups, or obtained by a transesterification of a polyol containing more than two terminal hydroxyl groups with a carboxylic acid ester containing more than two terminal hydroxyl groups;

   preferably, the number of terminal hydroxyl groups in the polyol containing more than two terminal hydroxyl groups is three, four, five or six; preferably, the polyol containing more than two terminal hydroxyl groups is one of pentaerythritol, dipentaerythritol and trimethylolpropane; preferably, the carboxylic acid containing more than two terminal hydroxyl groups is a monocarboxylic acid containing more than two terminal hydroxyl groups; preferably, the carboxylic acid containing more than two terminal hydroxyl groups is one of 2,2-dimethylolpropionic acid, 2,2-dimethylolbutyric acid;
preferably, the carboxylic acid ester containing more than two terminal hydroxyl groups is a monocarboxylic acid ester containing more than two terminal hydroxyl groups; preferably,the carboxylic acid ester containing more than two terminal hydroxyl groups is one of 2,2-dimethylolpropionate methyl ester, 2,2-dimethylolpropionate ethyl ester, 2,2-dimethylolpropionate propyl ester, 2,2-dimethylolpropionate butyl ester, 2,2-dimethylolbutyrate butyl ester, 2,2-dimethylolbutyrate propyl ester, 2,2-dimethylolbutyrate butyl ester, N,N-dihydroxyethyl-3-aminopropionate methyl ester, N,N-dihydroxyethyl-3-aminopropionate methyl ester and N,N-dihydroxyethyl-3-aminopropionate butyl ester; and/or, wherein the generation number of the dendritic polyester is from the 1st generation to the 5th generation.

**4.** The dendritic polymer according to any one of claims 1-3, wherein the dendritic polymer is obtained from the free radical polymerization reaction of a dendritic polyester and an alkenyl monomer.

**5.** The dendritic polymer according to any one of claims 1-4, wherein the non-ionic monomer is one or more selected from the group consisting of acrylamide, N,N-dimethylacrylamide, N-ethylacrylamide, N,N-diethylacrylamide, N-propylacrylamide, N-isopropylacrylamide, N-vinylformamide, N-vinylacetamide, N-vinyl-N-methylacetamide, N-vinylpyrrolidone and N-vinylcaprolactam; the anionic monomer is one or more selected from the group consisting of acrylic acid, methacrylic acid, 2-acrylamido-2-methylpropane sulfonic acid and 2-acryloxy-2-methylpropane sulfonic acid;

and/or, wherein the core has a structure represented by Formula (1) and/or a structure represented by Formula (2) and a structure corresponding to the 3rd generation to the 5th generation thereof;

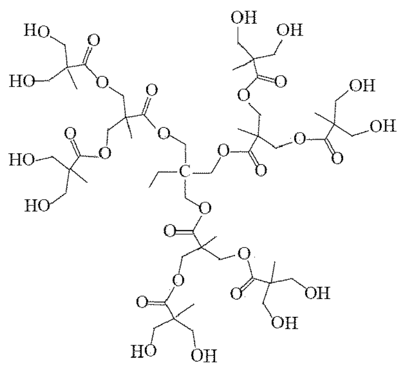

Formula (1)

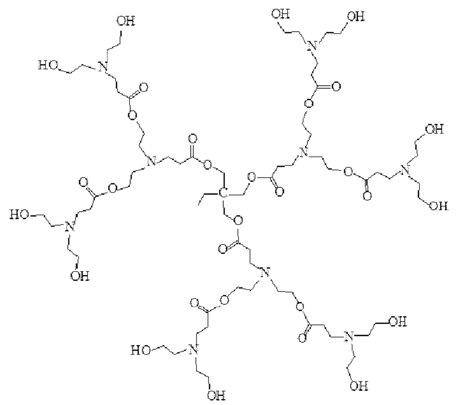

Formula (2);

the arm is a polymeric segment comprising an anionic monomer structural unit and a non-ionic monomer structural unit and optionally a cationic monomer structural unit, wherein the anionic monomer structural unit is sulfonic acid (sulfonate) represented by Formula (3) and/or Formula (3') and/or carboxylic acid (carboxylate) represented by Formula (4);

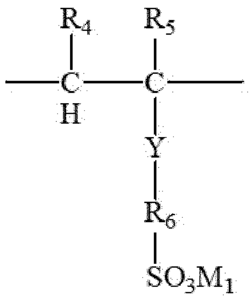 Formula (3), 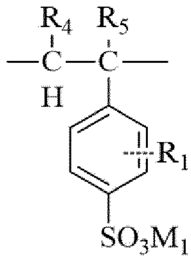 Formula (3'),

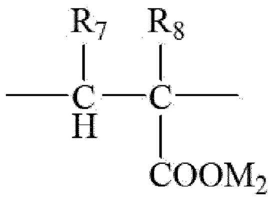 Formula (4);

in the Formula (3) and Formula (3'), $R_4$ and $R_5$ are respectively H or $C_1$-$C_5$ straight or branched chain alkyl, $M_1$ is H, $NH_4$ or an alkali metal element; in the Formula (3), $R_6$ is $C_1$-$C_5$ straight or branched chain alkylene, Y is

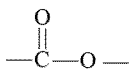 or 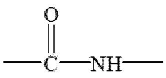 ;

in Formula (3'), $R_1$ is H or $C_1$-$C_5$ straight or branched chain alkyl; in the Formula (4), $R_7$ and $R_8$ are respectively H or $C_1$-$C_5$ straight or branched chain alkyl, and $M_2$ is H, $NH_4$ or an alkali metal element;

the non-ionic monomer structural unit has one or more of the structures represented by Formulae (5)-(7);

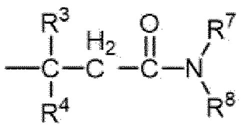 Formula (5); 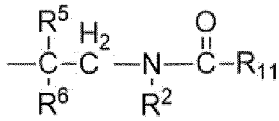 Formula (6);

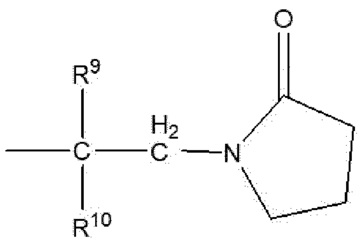 Formula (7);

in the formulae (5)-(7), each of $R^2$, $R^3$, $R^4$, $R^5$, $R^6$, $R^7$, $R^8$, $R^9$, $R^{10}$ and $R_{11}$ is H or a $C_1$-$C_5$ straight or branched chain alkyl.

**6.** The dendritic polymer according to claim 4 or 5, wherein a molar ratio of the anionic monomer to the non-ionic monomer is 0.5-2.5:1, preferably 1-2:1, preferably, a weight ratio of sulfonic acid (sulfonate) represented by Formula (3) and/or Formula (3') in the arm relative to the non-ionic monomer structural units other than the acrylamide monomer represented by Formula (5) with $R^7$ and $R^8$ being H is 4-1:1.

**7.** A method for preparing a filtration loss reducer comprising the following steps: contacting a dendritic polyester with an alkenyl monomer containing an anionic monomer and a non-ionic monomer under the free radical polymerization reaction conditions, and removing the unreacted monomer and solvent, wherein the free radical polymerization

conditions cause that the produced polymer has a weight average molecular weight of 30,000-1,000,000g/mol; and the alkenyl monomer contains a non-ionic monomer and an anionic monomer, wherein the non-ionic monomer is one or more selected from the group consisting of acrylamide monomers, chain and cyclic N-vinyl amide monomers, and the anionic monomer is a polymerizable monomer having carboxyl-COOH and/or sulfonic acid groups-$SO_3H$.

**8.** The method according to claim 7, wherein a molar ratio of the anionic monomer structural unit to the non-ionic monomer structural unit is within a range of 0.5-2.5, preferably 1-2; the non-ionic monomer is one or more selected from the group consisting of acrylamide, N,N-dimethylacrylamide, N-ethylacrylamide, N,N-diethylacrylamide, N-propylacrylamide, N-isopropylacrylamide, N-vinylformamide, N-vinylacetamide, N-vinyl-N-methylacetamide, N-vinylpyrrolidone and N-vinylcaprolactam; and the anionic monomer is one or more selected from the group consisting of acrylic acid, methacrylic acid, 2-acrylamido-2-methylpropane sulfonic acid and 2-acryloxy-2-methylpropane sulfonic acid.

**9.** The method according to claim 7 or 8, wherein the dendritic polyester is obtained by polycondensation of a polyol containing more than two terminal hydroxyl groups with a carboxylic acid containing more than two terminal hydroxyl groups, or obtained by a transesterification of a polyol containing more than two terminal hydroxyl groups with a carboxylic acid ester containing more than two terminal hydroxyl groups; preferably, the number of terminal hydroxyl groups in the polyol containing more than two terminal hydroxyl groups is three, four, five or six, preferably, the polyol containing more than two terminal hydroxyl groups is one of pentaerythritol, dipentaerythritol and trimethylolpropane; preferably, the carboxylic acid containing more than two terminal hydroxyl groups is a monocarboxylic acid containing more than two terminal hydroxyl groups; , preferably, the carboxylic acid containing more than two terminal hydroxyl groups is one of 2, 2-dimethylolpropionic acid, 2-dimethylolbutyric acid;
preferably, the carboxylic acid ester containing more than two terminal hydroxyl groups is a monocarboxylic acid ester containing more than two terminal hydroxyl groups; preferably, the carboxylic acid ester containing more than two of terminal hydroxyl groups is one of 2,2-dimethylolpropionate methyl ester, 2,2-dimethylolpropionate ethyl ester, 2,2-dimethylolpropionate propyl ester, 2,2-dimethylolpropionate butyl ester, 2,2-dimethylolbutyrate butyl ester, 2,2-dimethylolbutyrate propyl ester, 2,2-dimethylolbutyrate butyl ester, N,N-dihydroxyethyl-3-aminopropionate methyl ester, N,N-dihydroxyethyl-3-aminopropionate methyl ester and N,N- dihydroxyethyl-3-aminopropionate butyl ester.

**10.** The method according to claim 7, wherein the dendritic polyester has a structure represented by Formula (1) and/or a structure represented by Formula (2) and a structure corresponding to the 3rd generation to the 5th generation thereof;

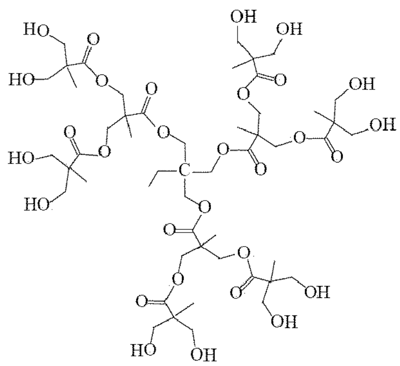

Formula (1)

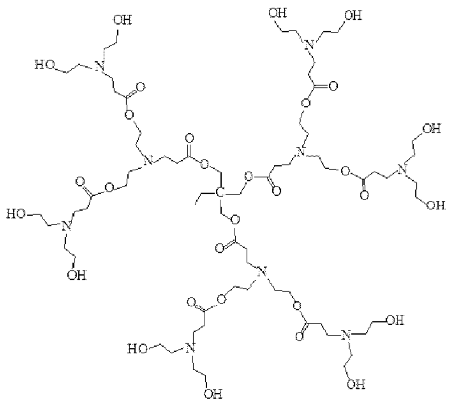 Formula (2);

the anionic monomer is sulfonic acid (sulfonate) represented by Formula (I) and/or carboxylic acid (carboxylate) represented by Formula (II) below;

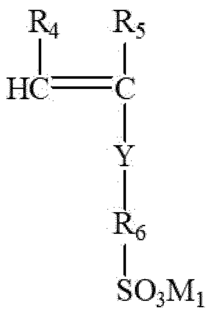 Formula (I), 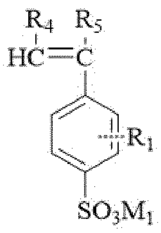 Formula (F),

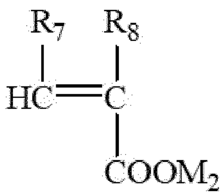 Formula (II);

in the Formula (I), Formula (I') or Formula (II), each of $R_1$, $R_4$, $R_5$, $R_7$, $R_8$ is H or $C_1$-$C_5$ straight or branched chain alkyl, $R_6$ is $C_1$-$C_5$ straight or branched chain alkylene, $M_1$ and $M_2$ are each independently H, $NH_4$ or an alkali metal element; and Y is

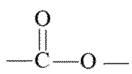 or 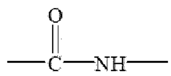;

the non-ionic monomer has one or more of the structures represented by Formulae (III)-(V) below;

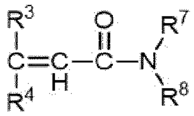 Formula (III); 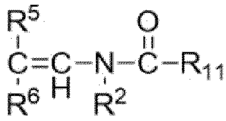 Formula (IV);

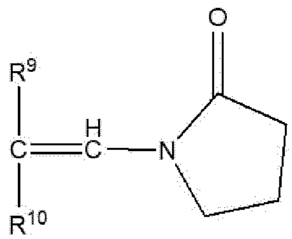

Formula (V);

in formulae (III)-(V), each of $R^2$, $R^3$, $R^4$, $R^5$, $R^6$, $R^7$, $R^8$, $R^9$, $R^{10}$, and $R_{11}$ is H or $C_1$-$C_5$ straight or branched chain alkyl.

**11.** The method according to claim 10, wherein a molar ratio of the anionic monomer to the non-ionic monomer is 0.5-2.5:1, preferably 1-2:1; preferably, a weight ratio of sulfonic acid (sulfonate) represented by Formula (I) and/or Formula (I') relative to the non-ionic monomer other than the acrylamide monomer represented by Formula (II) with $R^7$ and $R^8$ being H is 4-1:1.

**12.** The method according to any one of claims 7-11, wherein the polymerization reaction is carried out in an aqueous solution; the mode of initiating polymerization is at least one of the initiator-initiated polymerization, ultraviolet light-initiated polymerization and microwave-initiated polymerization; the initiator in the initiator-initiated polymerization is preferably a tetravalent cerium salt; more preferably at least one of ammonium cerium nitrate, ammonium cerium sulfate, ammonium cerium phosphate and ceric sulfate;
and/or, wherein the polymerization reaction conditions comprise a pH of 5-9, an oxygen-free environment, a temperature of 30-70°C and a time of 1-20 hours.

**13.** A filtrate loss reducer prepared with the method according to any one of claims 7-12.

**14.** A drilling fluid comprising the dendritic polymer according to any one of claims 1-6 and/or the filtrate loss reducer according to claim 13.

**15.** A use of the dendritic polymer according to any one of claims 1-6 and/or the filtrate loss reducer according to claim 13 in the aspects of the blocking with a drilling fluid and the filtrate loss reduction.

## Patentansprüche

**1.** Dendritisches Polymer, umfassend einen dendritischen Polyester als Kern und mehrere Arme, die durch Polymerisation eines Alkenylmonomers erhalten werden; wobei der quadratische Wurzel-Radius der Gyration des dendritischen Polymers 100 nm nicht übersteigt, wobei der quadratische Wurzel-Radius der Gyration des dendritischen Polymers wie in der Beschreibung angegeben bestimmt wird; das Alkenylmonomer ein nicht-ionisches Monomer und ein anionisches Monomer enthält, wobei das nicht-ionische Monomer eines oder mehrere ist, ausgewählt aus der Gruppe bestehend aus Acrylamidmonomeren, Ketten- und zyklischen N-Vinylamidmonomeren, und das anionische Monomer ein polymerisierbares Monomer mit Carboxyl-COOH- und/oder Sulfonsäuregruppen-$SO_3H$ ist.

**2.** Dendritisches Polymer gemäß Anspruch 1, wobei das dendritische Polymer ein Pfropfverhältnis von 50-100%, vorzugsweise 80-95%, aufweist;

und/oder, wobei das dendritische Polymer einen quadratische Wurzel-Radius der Gyration innerhalb eines Bereichs von 20-100 nm, vorzugsweise 25 nm-50 nm, besonders bevorzugt 25-40 nm, aufweist;
und/oder, wobei das dendritische Polymer ein gewichtsmittleres Molekulargewicht in einem Bereich von 30.000-1.000.000 g/mol, vorzugsweise 50.000-500.000 g/mol, mehr bevorzugt 100.000-300.000 g/mol, aufweist, wobei das gewichtsmittlere Molekulargewicht durch das Gelpermeationschromatographieverfahren gemessen wird; und/oder, wobei eine wässrige Lösung, die 1 Gew.-% des dendritischen Polymers enthält, eine scheinbare Viskosität innerhalb eines Bereichs von 4-50 mPa·s, vorzugsweise 5-20 mPa·s, besonders bevorzugt 10-15 mPa·s, aufweist, wobei die scheinbare Viskosität wie in der Beschreibung angegeben gemessen wird.

**3.** Dendritisches Polymer gemäß Anspruch 1 oder 2, wobei der dendritische Polyester durch Polykondensation eines

Polyols, das mehr als zwei terminale Hydroxylgruppen enthält, mit einer Carbonsäure, die mehr als zwei terminale Hydroxylgruppen enthält, oder durch Umesterung eines Polyols, das mehr als zwei terminale Hydroxylgruppen enthält, mit einem Carbonsäureester, der mehr als zwei terminale Hydroxylgruppen enthält, erhalten wird;

vorzugsweise beträgt die Anzahl der terminalen Hydroxylgruppen in dem Polyol, das mehr als zwei terminale Hydroxylgruppen enthält, drei, vier, fünf oder sechs; vorzugsweise ist das Polyol, das mehr als zwei terminale Hydroxylgruppen enthält, eines au Pentaerythrit, Dipentaerythrit und Trimethylolpropan;
vorzugsweise ist die Carbonsäure, die mehr als zwei terminale Hydroxylgruppen enthält, eine Monocarbonsäure, die mehr als zwei terminale Hydroxylgruppen enthält; vorzugsweise ist die Carbonsäure, die mehr als zwei terminale Hydroxylgruppen enthält, eine aus 2,2-Dimethylolpropionsäure, 2,2-Dimethylolbuttersäure;
vorzugsweise ist der Carbonsäureester, der mehr als zwei terminale Hydroxylgruppen enthält, ein Monocarbonsäureester, der mehr als zwei terminale Hydroxylgruppen enthält; vorzugsweise ist der Carbonsäureester, der mehr als zwei terminale Hydroxylgruppen enthält, einer aus 2,2-Dimethylolpropionatmethylester, 2,2-Dimethylolpropionatethylester, 2,2-Dimethylolpropionatpropylester, 2,2-Dimethylolpropionatbutylester, 2, 2-Dimethylolbutyrat-Butylester, 2,2-Dimethylolbutyrat-Propylester, 2,2-Dimethylolbutyrat-Butylester, N,N-Dihydroxyethyl-3-aminopropionat-Methylester, N,N-Dihydroxyethyl-3-aminopropionat-Methylester und N,N-Dihydroxyethyl-3-aminopropionat-Butylester;
und/oder, wobei die Generationsnummer des dendritischen Polyesters zwischen der 1. und der 5. Generation liegt.

**4.** Dendritisches Polymer gemäß mindestens einem der Ansprüche 1-3, wobei das dendritische Polymer aus der freiradikalischen Polymerisationsreaktion eines dendritischen Polyesters und eines Alkenylmonomers erhalten wird.

**5.** Dendritisches Polymer n gemäß mindestens einem der Ansprüche 1-4, wobei das nicht-ionische Monomer eines oder mehrere ist, ausgewählt aus der Gruppe bestehend aus Acrylamid, N,N-Dimethylacrylamid, N-Ethylacrylamid, N,N-Diethylacrylamid, N-Propylacrylamid, N-Isopropylacrylamid, N-Vinylformamid, N-Vinylacetamid, N-Vinyl-N-methylacetamid, N-Vinylpyrrolidon und N-Vinylcaprolactam; das anionische Monomer eines oder mehrere ist, ausgewählt aus der Gruppe bestehend aus Acrylsäure, Methacrylsäure, 2-Acrylamido-2-methylpropansulfonsäure und 2-Acryloxy-2-methylpropansulfonsäure;

und/oder, wobei der Kern eine durch die Formel (1) dargestellte Struktur und/oder eine durch die Formel (2) dargestellte Struktur und eine Struktur aufweist, die der 3. bis 5. Generation davon entspricht;

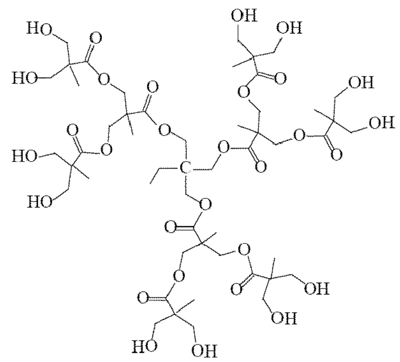

Formel (1)

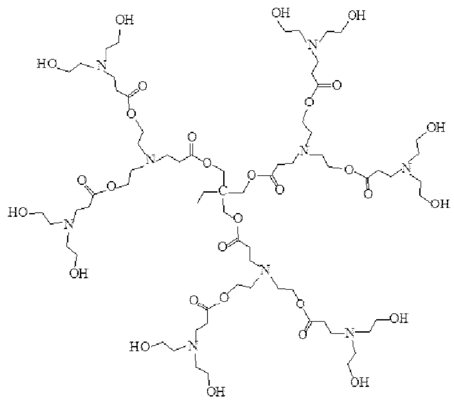

Formel (2);

der Arm ein Polymersegment ist, das eine anionische Monomerstruktureinheit und eine nicht-ionische Monomerstruktureinheit und optional eine kationische Monomerstruktureinheit umfasst, wobei die anionische Monomerstruktureinheit Sulfonsäure (Sulfonat), dargestellt durch Formel (3) und/oder Formel (3'), und/oder Carbonsäure (Carboxylat), dargestellt durch Formel (4), ist;

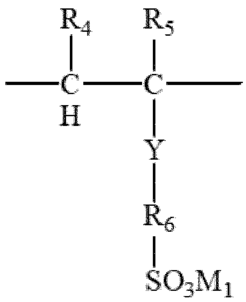

Formel (3),

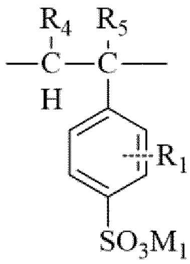

Formel (3'),

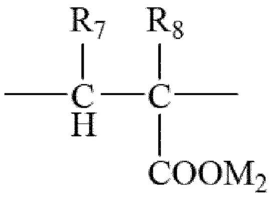

Formel (4);

in der Formel (3) und der Formel (3') sind $R_4$ und $R_5$ jeweils H oder geradkettiges oder verzweigtes $C_1$-$C_5$-Alkyl, $M_1$ ist H, $NH_4$ oder ein Alkalimetallelement; in der Formel (3) ist $R_6$ geradkettiges oder verzweigtes $C_1$-$C_5$-Alkylen, Y ist

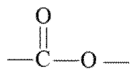

oder

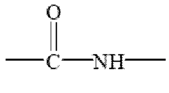

;

in der Formel (3') ist $R_1$ H oder geradkettiges oder verzweigtes $C_1$-$C_5$-Alkyl; in der Formel (4) sind $R_7$ und $R_8$ jeweils H oder gerad- oder verzweigtkettiges $C_1$-$C_5$-Alkyl, und $M_2$ ist H, $NH_4$ oder ein Alkalimetallelement; die nicht-ionische Monomer-Struktureinheit weist eine oder mehrere der durch die Formeln (5)-(7) dargestellten Strukturen auf;

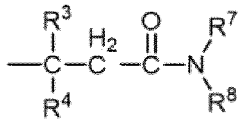 Formel (5); 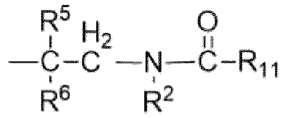 Formel (6);

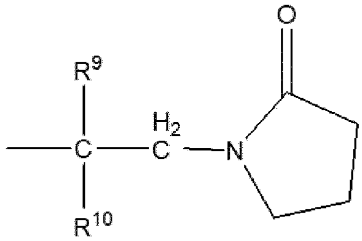 Formel (7);

in den Formeln (5)-(7) ist jedes von $R^2$, $R^3$, $R^4$, $R^5$, $R^6$, $R^7$, $R^8$, $R^9$, $R^{10}$ und $R_{11}$ H oder ein geradkettiges oder verzweigtes $C_1$-$C_5$-Alkyl.

**6.** Dendritisches Polymer gemäß Anspruch 4 oder 5, wobei das Molverhältnis des anionischen Monomers zu dem nichtionischen Monomer 0,5-2,5:1, vorzugsweise 1-2:1**,** beträgt, vorzugsweise ist ein Gewichtsverhältnis der Sulfonsäure (Sulfonat), dargestellt durch die Formel (3) und/oder die Formel (3') in dem Arm, relativ zu den nicht-ionischen Monomer-Struktureinheiten, die nicht das Acrylamid-Monomer, dargestellt durch die Formel (5), sind, wobei $R^7$ und $R^8$ H sind, 4-1:1.

**7.** Verfahren zur Herstellung eines Filtrationsverlustreduzierers, umfassend die folgenden Schritte: Inkontaktbringen eines dendritischen Polyesters mit einem Alkenylmonomer, das ein anionisches Monomer und ein nicht-ionisches Monomer enthält, unter den Reaktionsbedingungen der freien radikalischen Polymerisation und Entfernen des nichtumgesetzten Monomers und des Lösungsmittels, wobei die Bedingungen der freien radikalischen Polymerisation bewirken, dass das hergestellte Polymer ein gewichtsmittleres Molekulargewicht von 30.000 bis 1.000.000 g/mol aufweist; und das Alkenylmonomer ein nicht-ionisches Monomer und ein anionisches Monomer enthält, wobei das nicht-ionische Monomer eines oder mehrere ist, ausgewählt aus der Gruppe bestehend aus Acrylamidmonomeren, Ketten- und zyklischen N-Vinylamidmonomeren, und das anionische Monomer ein polymerisierbares Monomer mit Carboxyl-COOH- und/oder Sulfonsäuregruppen-$SO_3H$ ist.

**8.** Verfahren gemäß Anspruch 7, bei dem das Molverhältnis der anionischen Monomerstruktureinheit zu der nichtionischen Monomerstruktureinheit in einem Bereich von 0,5-2,5, vorzugsweise 1-2, liegt; das nicht-ionische Monomer eines oder mehrere ist, ausgewählt aus der Gruppe bestehend aus Acrylamid, N,N-Dimethylacrylamid, N-Ethylacrylamid, N,N-Diethylacrylamid, N-Propylacrylamid, N-Isopropylacrylamid, N-Vinylformamid, N-Vinylacetamid, N-Vinyl-N-methylacetamid, N-Vinylpyrrolidon und N-Vinylcaprolactam; und das anionische Monomer eines oder mehrere ist, ausgewählt aus der Gruppe bestehend aus Acrylsäure, Methacrylsäure, 2-Acrylamido-2-methylpropansulfonsäure und 2-Acryloxy-2-methylpropansulfonsäure.

**9.** Verfahren gemäß Anspruch 7 oder 8, bei dem der dendritische Polyester durch Polykondensation eines Polyols, das mehr als zwei terminale Hydroxylgruppen enthält, mit einer Carbonsäure, die mehr als zwei terminale Hydroxylgruppen enthält, oder durch Umesterung eines Polyols, das mehr als zwei terminale Hydroxylgruppen enthält, mit einem Carbonsäureester, der mehr als zwei terminale Hydroxylgruppen enthält, erhalten wird;

vorzugsweise beträgt die Anzahl der terminalen Hydroxylgruppen in dem Polyol, das mehr als zwei terminale Hydroxylgruppen enthält, drei, vier, fünf oder sechs, vorzugsweise ist das Polyol, das mehr als zwei terminale Hydroxylgruppen enthält, eines au Pentaerythrit, Dipentaerythrit und Trimethylolpropan;
vorzugsweise ist die Carbonsäure, die mehr als zwei terminale Hydroxylgruppen enthält, eine Monocarbonsäure, die mehr als zwei terminale Hydroxylgruppen enthält; vorzugsweise ist die Carbonsäure, die mehr als zwei terminale Hydroxylgruppen enthält, eine aus 2,2-Dimethylolpropionsäure, 2-Dimethylolbuttersäure;
vorzugsweise ist der Carbonsäureester, der mehr als zwei terminale Hydroxylgruppen enthält, ein Monocarbonsäureester, der mehr als zwei terminale Hydroxylgruppen enthält; vorzugsweise ist der Carbonsäureester mit mehr als zwei terminalen Hydroxylgruppen eine aus 2,2-Dimethylolpropionatmethylester, 2,2-Dimethylolpropionatethylester, 2,2-Dimethylolpropionatpropylester, 2,2-Dimethylolpropionatbutylester, 2, 2-Dimethylolbutyrat-Butylester, 2,2-Dimethylolbutyrat-Propylester, 2,2-Dimethylolbutyrat-Butylester, N,N-Dihydroxyethyl-3-aminopropionat-Methylester, N,N-Dihydroxyethyl-3-aminopropionat-Methylester und N,N-Dihydroxyethyl-3-aminopropionat-Butylester.

**10.** Verfahren gemäß Anspruch 7, bei dem der dendritische Polyester eine durch die Formel (1) dargestellte Struktur und/oder eine durch die Formel (2) dargestellte Struktur und eine Struktur aufweist, die der 3. bis 5. Generation davon entspricht;

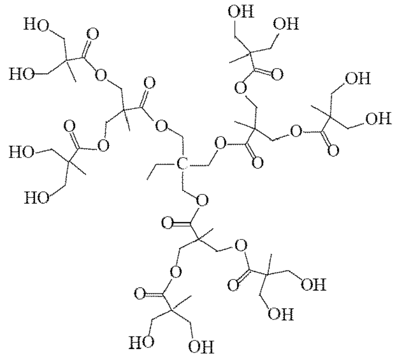

Formel (1)

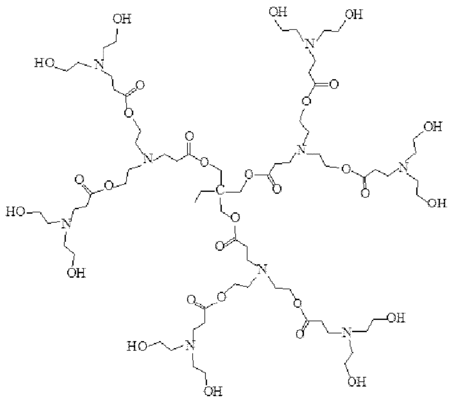

Formel (2);

das anionische Monomer ist Sulfonsäure (Sulfonat), dargestellt durch die folgende Formel (I) und/oder Carbonsäure (Carboxylat), dargestellt durch die folgende Formel (II);

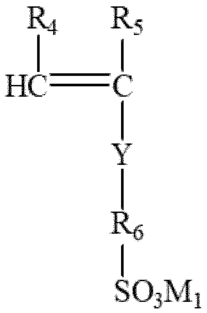

Formel (I),

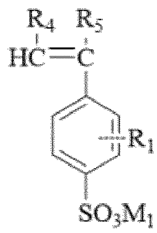

Formel (F),

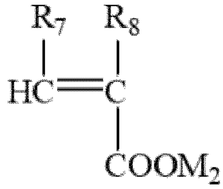

Formel (II);

in der Formel (I), Formel (I') oder Formel (II) ist jedes von $R_1$, $R_4$, $R_5$, $R_7$, $R_8$ H oder gerad- oder verzweigtkettiges $C_1$-$C_5$-Alkyl, $R_6$ ist geradkettiges oder verzweigtes $C_1$-$C_5$-Alkylen, $M_1$ und $M_2$ sind jeweils unabhängig H, $NH_4$ oder ein Alkalimetallelement; und Y ist

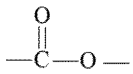

oder

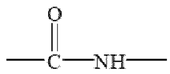

;

das nicht-ionische Monomer weist eine oder mehrere der durch die folgenden Formeln (III)-(V) dargestellten Strukturen auf;

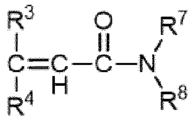

Formel (III);

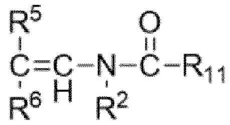

Formel (IV);

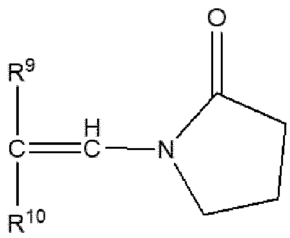

Formel (V);

in den Formeln (III)-(V) ist jedes von $R^2$, $R^3$, $R^4$, $R^5$, $R^6$, $R^7$, $R^8$, $R^9$, $R^{10}$ und $R_{11}$ H oder ein geradkettiges oder verzweigtes $C_1$-$C_5$-Alkyl.

**11.** Verfahren gemäß Anspruch 10, bei dem das Molverhältnis des anionischen Monomers zu dem nicht-ionischen Monomer 0,5-2,5:1, vorzugsweise 1-2:1 beträgt; vorzugsweise beträgt das Gewichtsverhältnis der Sulfonsäure (Sulfonat), dargestellt durch die Formel (I) und/oder die Formel (I'), zu dem nicht-ionischen Monomer, das nicht das Acrylamidmonomer, dargestellt durch die Formel (II) ist, wobei $R^7$ und $R^8$ H sind, 4-1:1.

**12.** Verfahren gemäß mindestens einem der Ansprüche 7-11, bei dem die Polymerisationsreaktion in einer wässrigen Lösung durchgeführt wird; die Art der Initiierung der Polymerisation mindestens eine der Initiator-initiierten Polymerisation, Ultraviolettlicht-initiierten Polymerisation und Mikrowelleninitiierten Polymerisation ist; der Initiator in der Initiator-initiierten Polymerisation vorzugsweise ein vierwertiges Cersalz ist; noch bevorzugter mindestens eines aus Ammoniumcernitrat, Ammoniumcersulfat, Ammoniumcercerphosphat und Cersulfat;
und/oder, wobei die Polymerisationsreaktionsbedingungen einen pH-Wert von 5-9, eine sauerstofffreie Umgebung, eine Temperatur von 30-70°C und eine Zeit von 1-20 Stunden umfassen.

**13.** Filtratverlustreduzierer, hergestellt nach dem Verfahren gemäß mindestens einem der Ansprüche 7-12.

**14.** Bohrflüssigkeit, die das dendritische Polymer gemäß mindestens einem der Ansprüche 1-6 und/oder den Filtratverlustreduzierer gemäß Anspruch 13 umfasst.

**15.** Verwendung des dendritischen Polymers gemäß mindestens einem der Ansprüche 1-6 und/oder des Filtratverlustreduzierers gemäß Anspruch 13 in den Aspekten des Blockierens mit einer Bohrflüssigkeit und der Filtratverlustreduzierung.

## Revendications

1. Polymère dendritique comprenant un polyester dendritique en tant que noyau et une pluralité de bras obtenus par polymérisation d'un monomère d'alcényle ; le rayon de giration de moyenne quadratique du polymère dendritique ne dépasse pas 100 nm, dans lequel le rayon de giration de moyenne quadratique du polymère dendritique est déterminé comme spécifié dans la description ; le monomère d'alcényle contient un monomère non ionique et un monomère anionique, dans lequel le monomère non ionique est un ou plusieurs monomères choisis dans le groupe constitué de monomères d'acrylamide, de monomères d'amide N-vinyl à chaîne et cycliques et le monomère anionique est un monomère polymérisable présentant des groupes carboxyles-COOH et/ou des groupes d'acide sulfonique -$SO_3H$.

2. Polymère dendritique selon la revendication 1, dans lequel le polymère dendritique présente un taux de greffe de 50 à 100 %, de préférence 80 à 95 % ;

   et/ou, dans lequel le polymère dendritique présente un rayon de giration de moyenne quadratique compris dans une plage de 20 à 100 nm, de préférence de 25 nm à 50 nm, plus préférablement de 25 à 40 nm ;
   et/ou, dans lequel le polymère dendritique présente une masse moléculaire moyenne en poids comprise dans une plage de 30 000 à 1 000 000 g/mol, de préférence de 50 000 à 500 000 g/mol, plus préférablement de 100 000 à 300 000 g/mol, dans lequel la masse moléculaire moyenne en poids est mesurée par la méthode de chromatographie par perméation sur gel ;
   et/ou, dans lequel une solution aqueuse contenant 1 % en poids du polymère dendritique a une viscosité apparente comprise dans une plage de 4 à 50 mPa·s, de préférence de 5 à 20 mPa·s, plus préférablement de 10 à 15 mPa·s, dans lequel la viscosité apparente est mesurée comme spécifié dans la description.

3. Polymère dendritique selon la revendication 1 ou 2, dans lequel le polyester dendritique est obtenu par polycondensation d'un polyol contenant plus de deux groupes hydroxyles terminaux avec un acide carboxylique contenant plus de deux groupes hydroxyles terminaux, ou obtenu par transestérification d'un polyol contenant plus de deux groupes hydroxyles terminaux avec un ester d'acide carboxylique contenant plus de deux groupes hydroxyles terminaux ;

   de préférence, le nombre de groupes hydroxyles terminaux dans le polyol contenant plus de deux groupes hydroxyles terminaux est de trois, quatre, cinq ou six ; de préférence, le polyol contenant plus de deux groupes hydroxyles terminaux est un des éléments parmi le pentaérythritol, le dipentaérythritol et le triméthylolpropane ;
   de préférence, l'acide carboxylique contenant plus de deux groupes hydroxyles terminaux est un acide monocarboxylique contenant plus de deux groupes hydroxyles terminaux ; de préférence, l'acide carboxylique contenant plus de deux groupes hydroxyles terminaux est un des éléments parmi l'acide 2,2-diméthylolpropionique, l'acide 2,2-diméthylolbutyrique ;
   de préférence, l'ester d'acide carboxylique contenant plus de deux groupes hydroxyles terminaux est un ester d'acide monocarboxylique contenant plus de deux groupes hydroxyles terminaux ; de préférence, l'ester d'acide carboxylique contenant plus de deux groupes hydroxyles terminaux est un des éléments parmi l'ester méthylique de 2,2-diméthylolpropionate, l'ester éthylique de 2,2-diméthylolpropionate, l'ester propylique de 2,2-diméthylolpropionate, l'ester butylique de 2,2-diméthylolpropionate, l'ester butylique de 2,2-diméthylolbutyrate, l'ester propylique de 2,2-diméthylolbutyrate, l'ester butylique de N,N-dihydroxyéthyl-3-aminopropionate, l'ester méthylique de N,N-dihydroxyéthyl-3-aminopropionate et l'ester butylique de N,N-dihydroxyéthyl-3-aminopropionate ;
   et/ou, dans lequel le numéro de génération du polyester dendritique est compris de la 1$^{re}$ génération à la 5$^{e}$ génération.

4. Polymère dendritique selon l'une quelconque des revendications 1 à 3, dans lequel le polymère dendritique est obtenu à partir de la réaction de polymérisation par radicaux libres d'un polyester dendritique et d'un monomère d'alcényle.

5. Polymère dendritique selon l'une quelconque des revendications 1 à 4, dans lequel le monomère non ionique est un ou plusieurs monomères choisis dans le groupe consistant en l'acrylamide, le N,N-diméthylacrylamide, le N-éthylacrylamide, le N,N-diéthylacrylamide, le N-propylacrylamide, le N-isopropylacrylamide, le N-vinylformamide, le N-vinylacétamide, le N-vinyl-N-méthylacétamide, la N-vinylpyrrolidone et le N-vinylcaprolactame ; le monomère anionique est un ou plusieurs monomères choisis dans le groupe constitué de l'acide acrylique, l'acide méthacrylique, l'acide 2-acrylamido-2-méthylpropane sulfonique et l'acide 2-acryloxy-2-méthylpropane sulfonique ;

et/ou, dans lequel le noyau présente une structure représentée par la formule (1) et/ou une structure représentée par la formule (2) et une structure correspondante de la 3e génération à la 5e génération de celui-ci ;

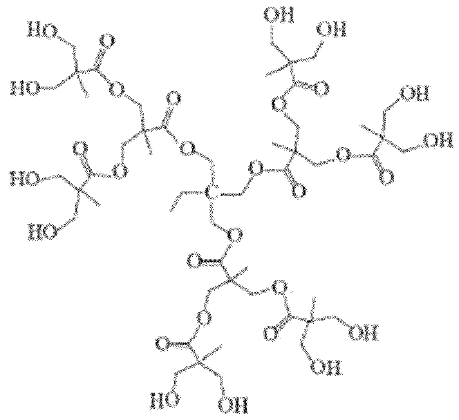

Formule (1)

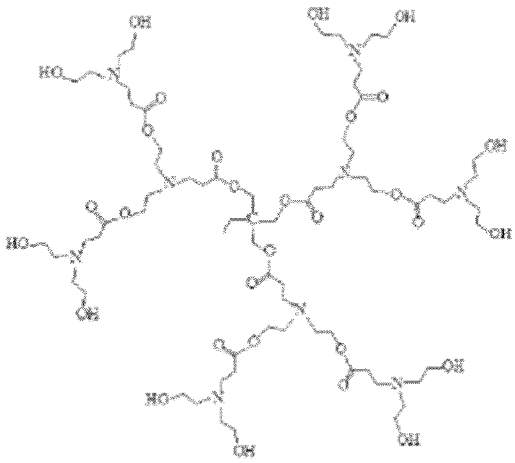

Formule (2) ;

le bras est un segment polymère comprenant une unité structurelle monomère anionique et une unité structurelle monomère non ionique et en option une unité structurelle monomère cationique, dans lequel l'unité structurelle monomère anionique est l'acide sulfonique (sulfonate) représenté par la formule (3) et/ou la formule (3') et/ou l'acide carboxylique (carboxylate) représenté par la formule (4) ;

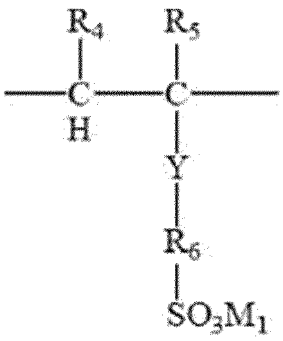

Formule (3),

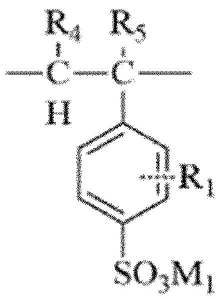

Formule (3')

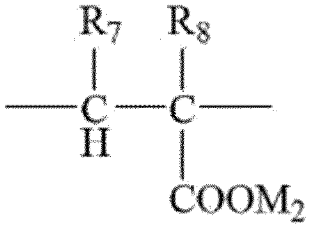
Formule (4) ;

dans la formule (3) et la formule (3'), $R_4$ et $R_5$ sont respectivement H ou un alkyle à chaîne droite ou ramifiée en $C_1$-$C_5$, $M_1$ est H, $NH_4$ ou un élément de métal alcalin ; dans la formule (3), $R_6$ est un alkylène à chaîne droite ou ramifiée en $C_1$-$C_5$ , Y est

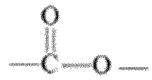

ou

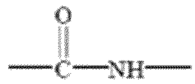 ;

dans la formule (3'), $R_1$ est H ou un alkyle à chaîne droite ou ramifiée en $C_1$-$C_5$ ; dans la formule (4), $R_7$ et $R_8$ sont respectivement H ou un alkyle à chaîne droite ou ramifiée en $C_1$-$C_5$, et $M_2$ est H, $NH_4$ ou un élément de métal alcalin ;
l'unité structurelle monomère non ionique présente une ou plusieurs des structures représentées par les formules (5) à (7) ;

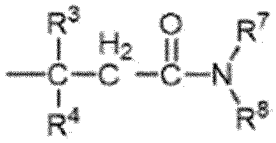
Formule (5) ;

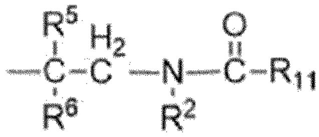
Formule (6) ;

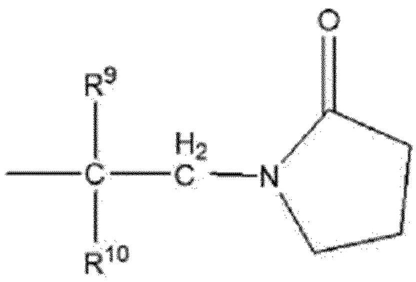
Formule (7) ;

dans les formules (5) à (7), chaque élément parmi $R^2$, $R^3$, $R^4$, $R^5$, $R^6$, $R^7$, $R^8$, $R^9$, $R^{10}$ et $R_{11}$ est H ou un alkyle à chaîne droite ou ramifiée en $C_1$-$C_5$.

**6.** Polymère dendritique selon la revendication 4 ou 5, dans lequel un rapport molaire du monomère anionique sur le monomère non ionique est compris de 0,5 à 2,5:1, de préférence de 1 à 2:1, de préférence, un rapport pondéral de l'acide sulfonique (sulfonate) représenté par la formule (3) et/ou la formule (3') dans le bras par rapport aux unités structurelles monomères non ioniques autres que le monomère d'acrylamide représenté par la formule (5) avec $R^7$ et $R^8$ étant H est compris de 4 à 1:1.

**7.** Procédé destiné à préparer un réducteur de pertes de filtration comprenant les étapes suivantes : mettre en contact un polyester dendritique avec un monomère d'alcényle contenant un monomère anionique et un monomère non ionique

dans des conditions de réaction de polymérisation par radicaux libres, et élimination du monomère n'ayant pas réagi et du solvant, dans lequel les conditions de polymérisation par radicaux libres font que le polymère produit présente une masse moléculaire moyenne en poids de 30 000 à 1 000 000 g/mol ; et le monomère d'alcényle contient un monomère non ionique et un monomère anionique, dans lequel le monomère non ionique est un ou plusieurs monomères choisis dans le groupe consistant en les monomères d'acrylamide, les monomères d'amide N-vinyl à chaîne et cyclique et le monomère anionique est un monomère polymérisable ayant des groupes carboxyles -COOH et/ou des groupes d'acide sulfonique $SC_3H$.

**8.** Procédé selon la revendication 7, dans lequel un rapport molaire de l'unité structurelle monomère anionique sur l'unité structurelle monomère non ionique est compris dans une plage de 0,5 à 2,5, de préférence de 1 à 2 ; le monomère non ionique est un ou plusieurs monomères choisis dans le groupe consistant an l'acrylamide, le N,N-diméthylacrylamide, le N-éthylacrylamide, le N,N-diéthylacrylamide, le N-propylacrylamide, le N-isopropylacrylamide, le N-vinylformamide, le N-vinylacétamide, le N-vinyl-N-méthylacétamide, la N-vinylpyrrolidone et le N-vinylcaprolactame ; et le monomère anionique est un ou plusieurs monomères choisis dans le groupe consistant en l'acide acrylique, l'acide méthacrylique, l'acide 2-acrylamido-2-méthylpropane sulfonique et l'acide 2-acryloxy-2-méthylpropane sulfonique.

**9.** Procédé selon la revendication 7 ou 8, dans lequel le polyester dendritique est obtenu par polycondensation d'un polyol contenant plus de deux groupes hydroxyles terminaux avec un acide carboxylique contenant plus de deux groupes hydroxyles terminaux, ou obtenu par une transestérification d'un polyol contenant plus de deux groupes hydroxyles terminaux avec un ester d'acide carboxylique contenant plus de deux groupes hydroxyles terminaux ; de préférence, le nombre de groupes hydroxyles terminaux dans le polyol contenant plus de deux groupes hydroxyles terminaux est de trois, quatre, cinq ou six, de préférence, le polyol contenant plus de deux groupes hydroxyles terminaux est un des éléments parmi le pentaérythritol, le dipentaérythritol et le triméthylolpropane ;

de préférence, l'acide carboxylique contenant plus de deux groupes hydroxyles terminaux est un acide monocarboxylique contenant plus de deux groupes hydroxyles terminaux ; de préférence, l'acide carboxylique contenant plus de deux groupes hydroxyles terminaux est un des éléments parmi l'acide 2,2-diméthylolpropionique, l'acide 2-diméthylolbutyrique ;
de préférence, l'ester d'acide carboxylique contenant plus de deux groupes hydroxyles terminaux est un ester d'acide monocarboxylique contenant plus de deux groupes hydroxyles terminaux ; de préférence, l'ester d'acide carboxylique contenant plus de deux groupes hydroxyles terminaux est un des éléments parmi l'ester méthylique de 2,2-diméthylolpropionate, l'ester éthylique de 2,2-diméthylolpropionate, l'ester propylique de 2,2-diméthylolpropionate, l'ester butylique de 2,2-diméthylolpropionate, l'ester butylique de 2,2-diméthylolbutyrate, l'ester propylique de 2,2-diméthylolbutyrate, l'ester butylique de N,N-dihydroxyéthyl-3-aminopropionate, l'ester méthylique de N,N-dihydroxyéthyl-3-aminopropionate et l'ester butylique de N,N-dihydroxyéthyl-3-aminopropionate.

**10.** Procédé selon la revendication 7, dans lequel le polyester dendritique présente une structure représentée par la formule (1) et/ou une structure représentée par la formule (2) et une structure correspondante de la 3e génération à la 5e génération de celui-ci ;

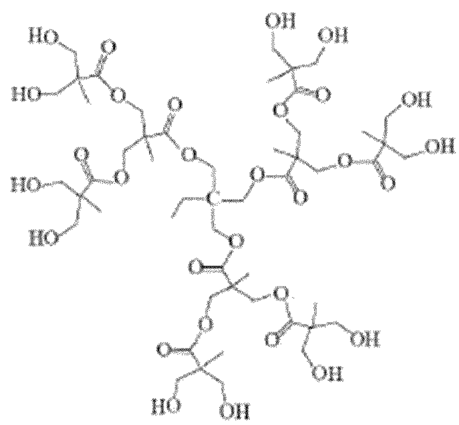

Formule (1)

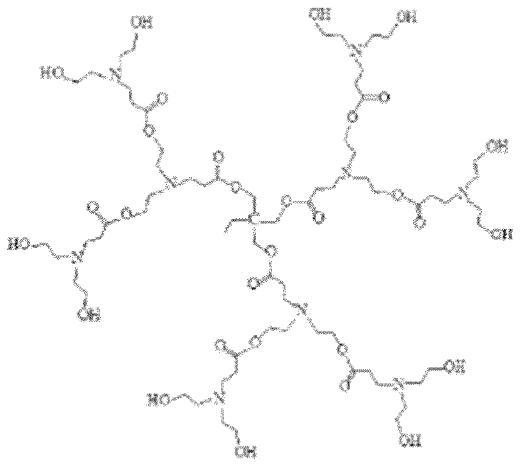

Formule (2) ;

le monomère anionique est l'acide sulfonique (sulfonate) représenté par la formule (I) et/ou l'acide carboxylique (carboxylate) représenté par la formule (II) ci-dessous ;

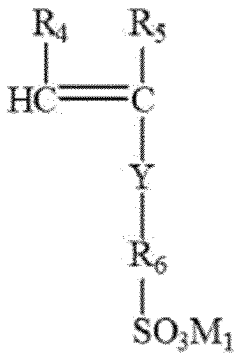 Formule (I),

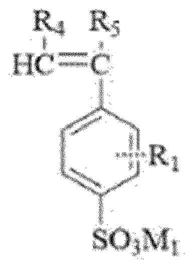 Formule (F),

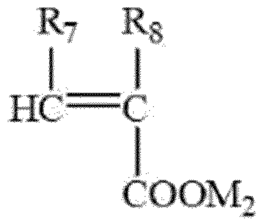 Formule (II) ;

dans la formule (I), la formule (I') ou la formule (II), chaque élément parmi $R_1$, $R_4$, $R_5$, $R_7$, $R_8$ est H ou un alkyle à chaîne droite ou ramifiée en $C_1$-$C_5$, $R_6$, R6 est un alkylène à chaîne droite ou ramifiée en $C_1$-$C_5$ , $M_1$ et $M_2$ sont chacun indépendamment H, $NH_4$ ou un élément de métal alcalin ; et Y est

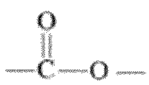

ou

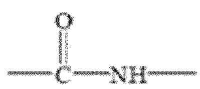 ;

le monomère non ionique présente une ou plusieurs des structures représentées par les formules (III)-(V) ci-dessous ;

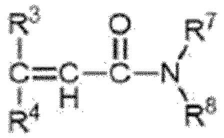 Formule (III) ; 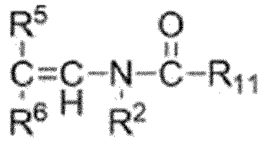 Formule (IV) ;

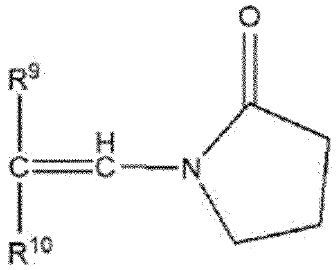 Formule (V) ;

dans les formules (III)-(V), chaque élément parmi $R^2$, $R^3$, $R^4$, $R^5$, $R^6$, $R^7$, $R^8$, $R^9$, $R^{10}$ et $R_{11}$ est H ou un alkyle à chaîne droite ou ramifiée en $C_1$-$C_5$.

**11.** Procédé selon la revendication 10, dans lequel un rapport molaire du monomère anionique sur le monomère non ionique est compris de 0,5 à 2,5:1, de préférence de 1 à 2:1 ; de préférence, un rapport pondéral de l'acide sulfonique (sulfonate) représenté par la formule (I) et/ou la formule (I') par rapport au monomère non ionique autre que le monomère d'acrylamide représenté par la formule (II) avec $R^7$ et $R^8$ étant H est compris de 4 à 1:1.

**12.** Procédé selon l'une quelconque des revendications 7 à 11, dans lequel la réaction de polymérisation est réalisée dans une solution aqueuse ; le mode d'initiation de la polymérisation est au moins un mode parmi la polymérisation initiée par initiateur, la polymérisation initiée par lumière ultraviolette et la polymérisation initiée par micro-ondes ; l'initiateur dans la polymérisation initiée par initiateur est de préférence un sel de cérium tétravalent ; plus préférablement au moins un élément parmi le nitrate de cérium d'ammonium, le sulfate de cérium d'ammonium, le phosphate de cérium d'ammonium et le sulfate cérique ;
et/ou, dans lequel les conditions de réaction de polymérisation comprennent un pH de 5 à 9, un environnement sans oxygène, une température de 30 à 70°C et une durée de 1 à 20 heures.

**13.** Réducteur de pertes de filtrat préparé avec le procédé selon l'une quelconque des revendications 7 à 12.

**14.** Fluide de forage comprenant le polymère dendritique selon l'une quelconque des revendications 1 à 6 et/ou le réducteur de pertes de filtrat selon la revendication 13.

**15.** Utilisation du polymère dendritique selon l'une quelconque des revendications 1 à 6 et/ou du réducteur de pertes de filtrat selon la revendication 13 dans les aspects de blocage avec un fluide de forage et de la réduction de pertes de filtrat.

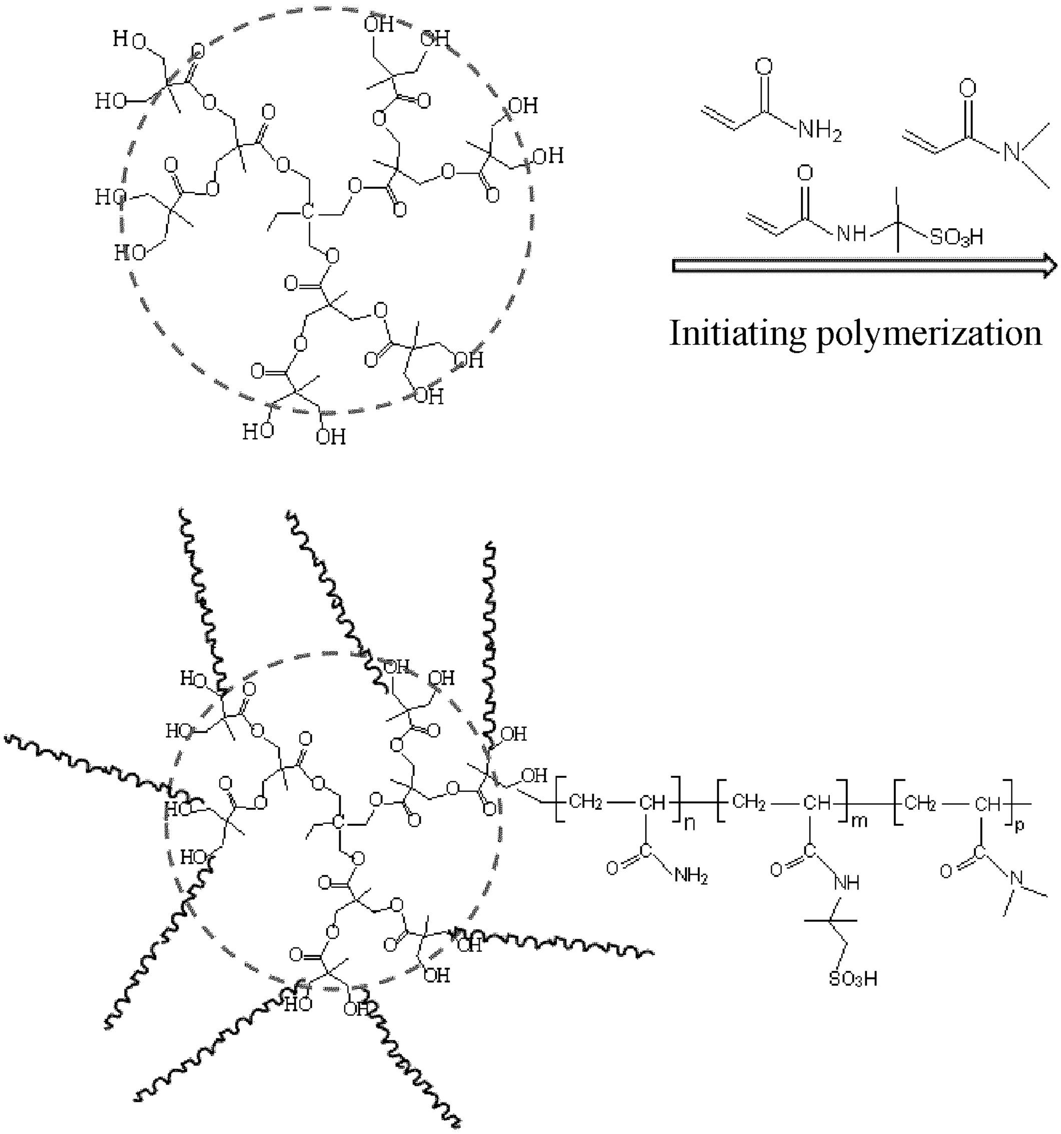


FIG. 1

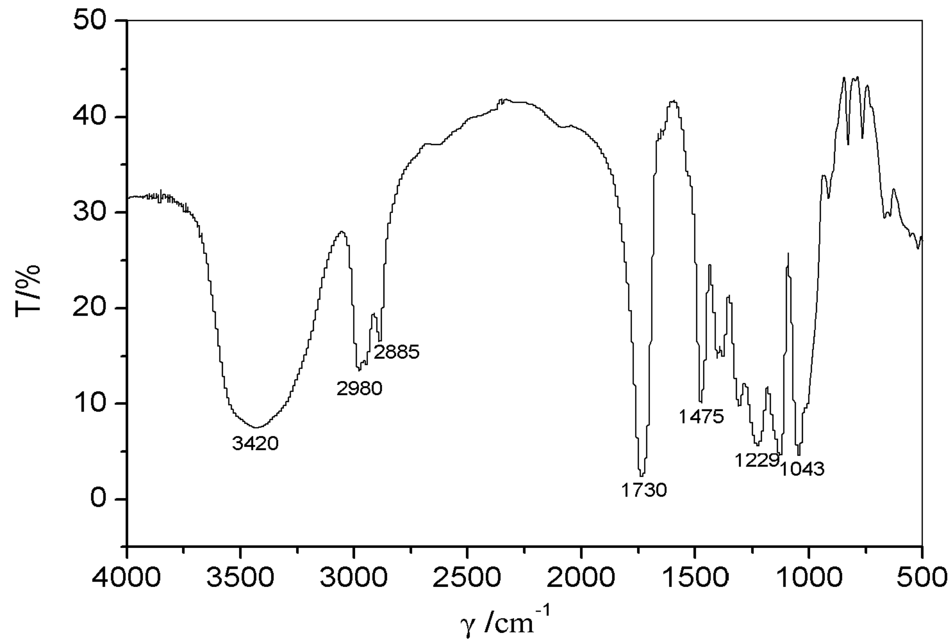
50
40
30
20
10
0
T/%
4000
3500
3000
2500
2000
1500
1000
500
γ /cm-1
3420
2980
2885
1730
1475
1229
1043

FIG. 2

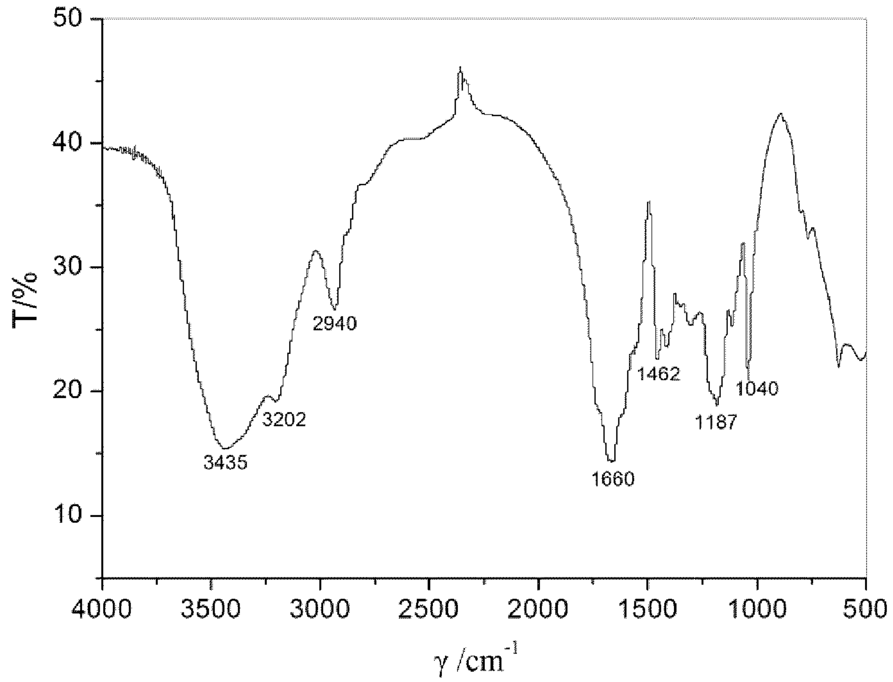
50
40
30
20
10
T/%
4000
3500
3000
2500
2000
1500
1000
500
γ /cm-1
3435
3202
2940
1660
1462
1187
1040

FIG. 3

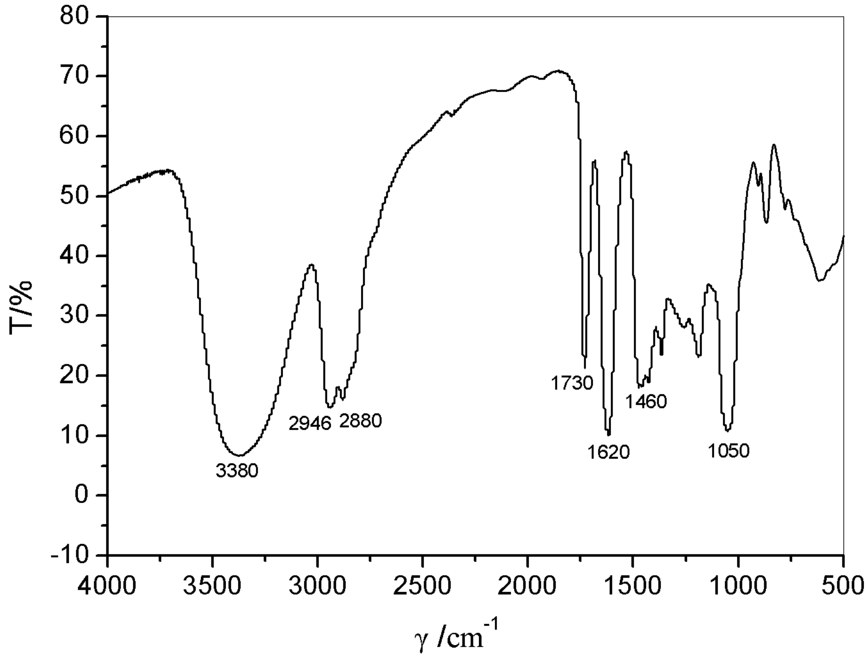
80
70
60
50
40
30
20
10
0
-10
T/%
4000
3500
3000
2500
2000
1500
1000
500
γ /cm-1
3380
2946
2880
1730
1620
1460
1050

FIG. 4

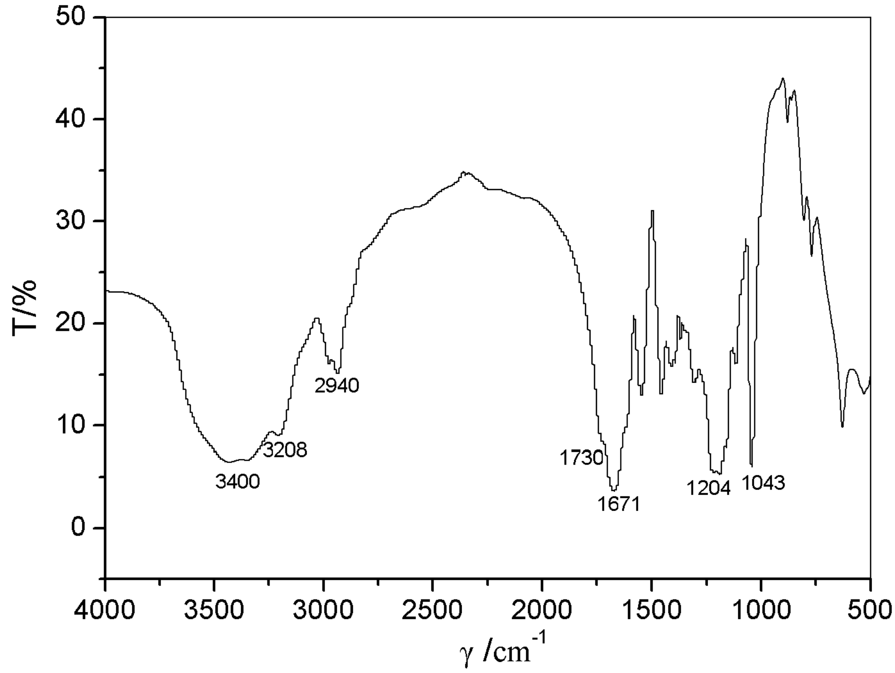
50
40
30
20
10
0
T/%
4000
3500
3000
2500
2000
1500
1000
500
γ /cm-1
3400
3208
2940
1730
1671
1204
1043

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110226208
- CN 202110227412
- CN 111171224 A
- US 4938803 A
- CN 109134839 A
- CN 107674189 A
- CN 101993532 A